# EUROPEAN PATENT APPLICATION

(11) **EP 4 280 360 A2**
(43) Date of publication of application: **22.11.2023**
(21) Application number: 23173732.1
(22) Date of filing: 16.05.2023
(51) Int. Cl.: H01M 50/211, H01M 50/247, H01M 50/284, H01M 50/502, H01R 13/64

(54) **BATTERY PACK**

(30) Priority: 17.05.2022 US 202263342760 P
(71) Applicant: Milwaukee Electric Tool Corporation, Brookfield, WI 53005 (US)
(72) Inventor: SILHA, Wyatt R., Milwaukee, 53210 (US); CASTAÑOS, Carmen J., Milwaukee, 53202 (US); MEYER, Zachery, Hartland, 53029 (US); ZIDEL, Eli M., Milwaukee, 53211 (US); WEINHEIMER, Matthew J., Wauwatosa, 53226 (US); FOSTER, Karl Bernard Iversen, Wauwatosa, 53226 (US)
(74) Representative: Forresters IP LLP

(57) **Abstract**

A battery pack has a housing, a core box, a stack of pouch cells, an end plate, battery pack terminals, and a circuit board. The core box is disposed in the housing and has a support surface. The stack of pouch cells are supported by the support surface. Each pouch cell has cell tabs that extend from a common side of the pouch cell. The end plate has slots, and the cell tabs extend through the slots. The battery pack terminals are electrically connected to the stack of pouch cells and can be electrically connected to an electrical device. The circuit board is coupled to the core box opposite the support surface. The circuit board is electrically connected to the stack of pouch cells and the battery pack terminals. The core box, the end plate, and the circuit board cooperate to enclose the stack of pouch cells.

## Description

### CROSS-REFERENCE TO RELATED APPLICATIONS

This application claims priority to prior-filed, co-pending U.S. Provisional Patent Application No. 63/342,760, filed on May 17, 2022, the entire contents of which are incorporated herein by reference.

### FIELD

The present disclosure relates to battery packs, and more particularly to battery pack with pouch cells.

### BACKGROUND

Typically, electrical equipment, such as, for example, a cordless power tool, is powered by a rechargeable battery. The battery may be periodically charged in a compatible battery charger.

### SUMMARY

The disclosure provides, in one aspect, a battery pack having a housing, a core box, a stack of pouch cells, an end plate, battery pack terminals, and a circuit board. The core box is disposed in the housing and has a support surface. The stack of pouch cells are supported by the support surface. Each pouch cell has cell tabs that extend from a common side of the pouch cell. The end plate has slots, and the cell tabs extend through the slots. The battery pack terminals are electrically connected to the stack of pouch cells and can be electrically connected to an electrical device. The circuit board is coupled to the core box opposite the support surface. The circuit board is electrically connected to the stack of pouch cells and the battery pack terminals. The core box, the end plate, and the circuit board cooperate to enclose the stack of pouch cells.

The disclosure provides, in another aspect, a battery pack having a housing, a core box disposed in the housing, a stack of pouch cells disposed in the core box, an end plate coupled to the core box, and circuit board coupled to the core box. Each of the pouch cells have cell tabs coupled to cell tabs of adjacent pouch cells. The pouch cells are electrically connected in series such that an electrical pathway through the pouch cells is in a serpentine pattern. The end plate has slots, and the cell tabs extend through the slots. The stack of pouch cells are at least partially enclosed by the circuit board and the core box. At least a portion of a cell tab is disposed on a side of the circuit board that is opposite the core box.

The disclosure provides, in yet another aspect, a battery pack having a housing, a core box disposed in the housing, a stack of pouch cells disposed in the core box, an end plate coupled to the core box, a resilient layer, battery pack terminals, a first circuit board, a second circuit board, a voltage tap, and a thermistor. Each of the pouch cells have cell tabs coupled to cell tabs of adjacent pouch cells. The pouch cells are electrically connected in series such that an electrical pathway through the pouch cells is in a serpentine pattern. The end plate has slots, and the cell tabs extend through the slots. The resilient layer is disposed between adjacent pouch cells of the stack of pouch cells. The battery pack terminals are configured to electrically connect to the battery pack terminals. The first circuit board is electrically connected to the stack of pouch cells and the second circuit board is electrically connected to the battery pack terminals. The voltage tap is electrically connected to one of the first circuit board and the second circuit board and electrically connected to two coupled cell tabs of the adjacent pouch cells. The thermistor is electrically connected to one of the first circuit board and the second circuit board. The core box, the end plate, and the first circuit board cooperate to enclose the stack of pouch cells.

The disclosure provides, in one aspect, a battery pack comprising:
a housing;
a core box disposed in the housing, the core box including a support surface;
a stack of pouch cells supported by the support surface, each pouch cell having cell tabs extending from a common side of the pouch cell;
an end plate coupled to the core box, the end plate having slots defined therein, the cell tabs extending through the slots;
battery pack terminals electrically connected to the stack of pouch cells, the battery pack terminals configured to electrically connect to an electrical device; and
a circuit board coupled to the core box opposite the support surface, the circuit board electrically connected to the stack of pouch cells and the battery pack terminals,
wherein the core box, the end plate, and the circuit board cooperate to enclose the stack of pouch cells.

The battery pack may further comprise a resilient layer disposed between adjacent pouch cells of the stack of pouch cells.

The battery pack may further comprise a resilient layer disposed between the circuit board and the stack of pouch cells.

The stack of pouch cells may have a height that is greater than 60% of a height of the core box.

The stack of pouch cells may have a height that is greater than 70% of the height of the core box.

The battery pack may have a height between 85mm and 75mm.

The core box may have a height that is greater than 50% of a total height of the battery pack.

The core box may have a height that is greater than 55% of the total height of the battery pack.

The stack of pouch cells may have a height that greater than is 30% of a total height of the battery pack.

The stack of pouch cells may have a height that is greater than 40% of the total height of the battery pack.

The battery pack terminals may extend in a direction toward a plane that is coplanar with the end plate.

The cell tabs may be folded against the end plate.

The housing may include an air inlet and an air outlet,
a cooling airflow path extends from the air inlet to the air outlet, and
the cooling airflow path extends between the core box and the housing.

The core box may be snap fitted to the end plate.

The core box may be snap fitted to the circuit board.

The disclosure provides, in one aspect, a battery pack comprising:
a housing;
a core box disposed in the housing;
a stack of pouch cells disposed in the core box, each of the pouch cells including cell tabs coupled to cell tabs of adjacent pouch cells, the pouch cells electrically connected in series such that an electrical pathway through the pouch cells is in a serpentine pattern;
an end plate coupled to the core box, the end plate having slots defined therein, the cell tabs extending through the slots; and
a circuit board coupled to the core box, the stack of pouch cells at least partially enclosed by the circuit board and the core box,
wherein at least a portion of a cell tab is disposed on a side of the circuit board that is opposite that of the core box.

The battery pack may further comprise a bus bar disposed over a portion of the end plate, the bus bar coupled to a cell tab of a farthest pouch cell from the circuit board of the stack of pouch cells.

The bus bar may extends along the end plate, bend over an edge of the circuit board, and may be coupled to the side of the circuit board that is opposite that of the core box.

The battery pack may further comprise an insulative frame disposed between the bus bar and the end plate.

The battery pack may further comprise a voltage tap, the voltage tap electrically connected to the circuit board and two coupled cell tabs of adjacent pouch cells.

The battery pack may further comprise a thermistor electrically connected to the circuit board.

The circuit board may include a first circuit board,
the battery pack may include a second circuit board disposed on the side of the first circuit board that is opposite that of the core box, and
the second circuit board may be electrically connected to the first circuit board.

The cell tabs of adjacent pouch cells may be welded together, and
the weld may be an oscillating shape.

The disclosure provides, in one aspect, a battery pack comprising:
a housing;
a core box disposed in the housing;
a stack of pouch cells disposed in the core box, each of the pouch cells including cell tabs coupled to cell tabs of adjacent pouch cells, the pouch cells electrically connected in series such that an electrical pathway through the pouch cells is in a serpentine pattern;
an end plate coupled to the core box, the end plate having slots defined therein, the cell tabs extending through the slots;
a resilient layer disposed between adjacent pouch cells of the stack of pouch cells;
battery pack terminals electrically connected to the stack of pouch cells, the battery pack terminals configured to electrically connect to an electrical device;
a first circuit board electrically connected to the stack of pouch cells;
a second circuit board electrically connected to the battery pack terminals;
a voltage tap electrically connected to at least one of the first circuit board and the second circuit board and to two coupled cell tabs of adjacent pouch cells; and
a thermistor electrically connected to one of the first circuit board and the second circuit board,
wherein the core box, the end plate, and the first circuit board cooperate to enclose the stack of pouch cells.

### BRIEF DESCRIPTION OF THE DRAWINGS

FIG. 1 is a front perspective view of a battery pack.
FIG. 2 is a rear perspective view of the battery pack of FIG. 1.
FIG. 3 is a front view of the battery pack of FIG. 1.
FIG. 4 is a rear view of the battery pack of FIG. 1.
FIG. 5 is a side view of the battery pack of FIG. 1.
FIG. 6 is another side view of the battery pack of FIG. 1.
FIG. 7 is a top view of the battery pack of FIG. 1.
FIG. 8 is a bottom view of the battery pack of FIG. 1.
FIG. 9A is a perspective view of the top housing of the battery pack of FIG. 1.
FIGS. 9B-9C are bottom views of the top housing of the battery pack of FIG. 1.
FIG. 10A is a perspective view of the middle housing of the battery pack of FIG. 1.
FIG. 10B is a bottom view of the middle housing of the battery pack of FIG. 1.
FIG. 11 is a perspective view of the bottom housing of the battery pack of FIG. 1.
FIG. 12 is a perspective view of the grip of the battery pack of FIG. 1.
FIG. 13 is a section view of the battery pack of FIG. 1.
FIG. 14 is a rear perspective view of the battery pack of FIG. 1 with the housing removed.
FIG. 15 is a front perspective view of the battery pack of FIG. 1 with the housing removed.
FIG. 16 is a perspective view of the grip cover of the battery pack of FIG. 1.
FIG. 17 is a perspective view of the core box of the battery pack of FIG. 1.
FIG. 18 is a perspective view of the core box with the end plate of the battery pack of FIG. 1.
FIG. 19 a perspective view of the core box with battery cells of the battery pack of FIG. 1.
FIG. 20 is a partial section view of the battery pack of FIG. 1.
FIG. 21 is a detailed section view of the battery pack of FIG. 1.
FIG. 22 is a section view of another embodiment of a battery pack.
FIG. 23A is a front perspective view of the end plate of the battery pack of FIG. 1.
FIG. 23B is a rear perspective view of the end plate of the battery pack of FIG. 1.
FIG. 24 is a partial rear perspective view of the of battery pack of FIG. 1 with the housing removed.
FIG. 25 is a partial rear perspective view of the of battery pack of FIG. 1 with the housing removed.
FIG. 26A is a top view of the circuit boards of the battery pack of FIG. 1.

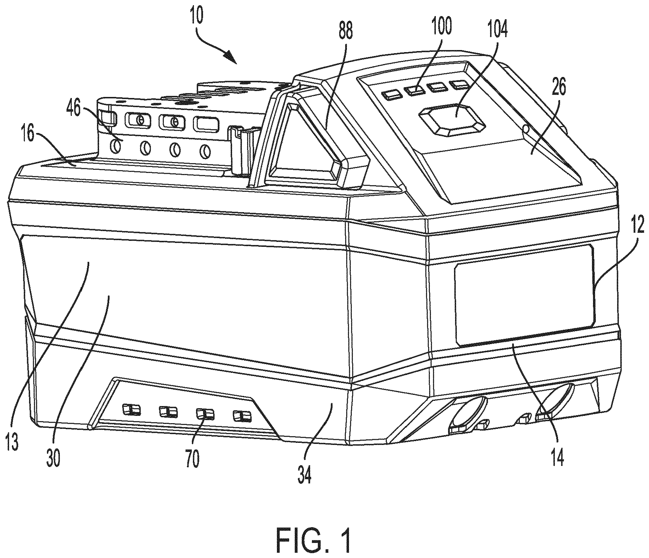

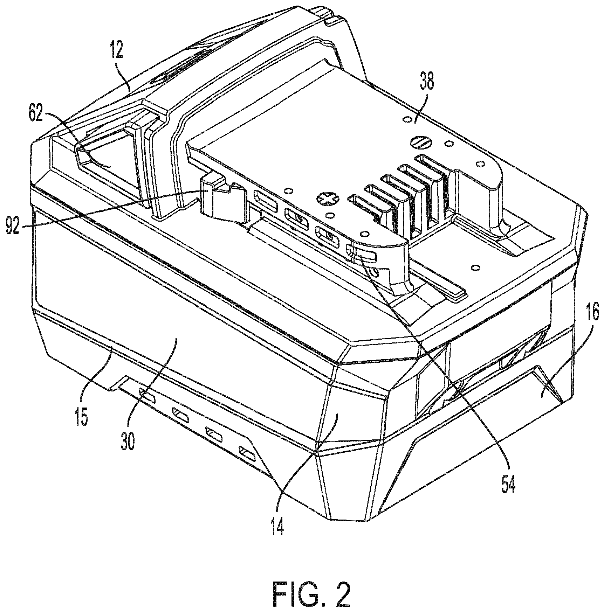

FIG. 2BA is a side view of the circuit boards of the battery pack of FIG. 1.

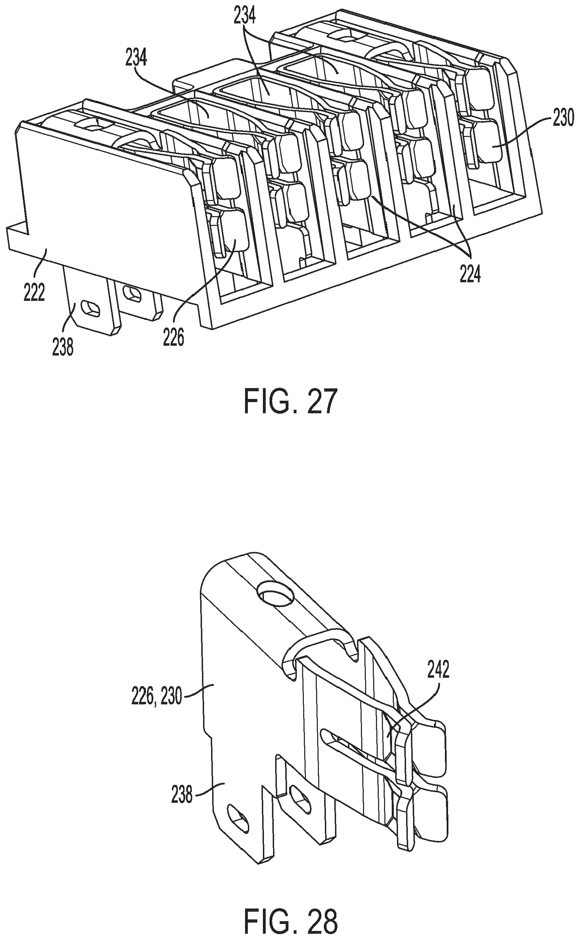

FIG. 27 is a perspective of the terminals and terminal housing of the battery pack of FIG. 1.
FIG. 28 is a perspective view of the positive terminal of the battery pack of FIG. 1.

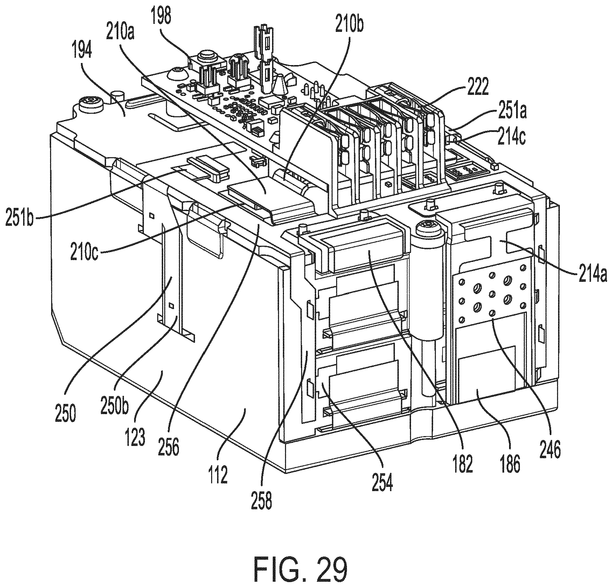

FIG. 29 is another perspective view of the battery pack of FIG. 1 with the housing removed.

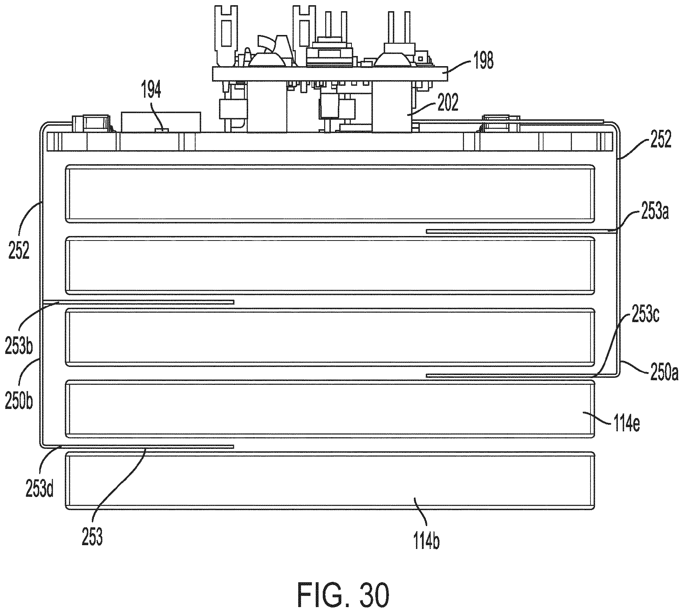

FIG. 30 is another section view of the battery pack of FIG. 1.

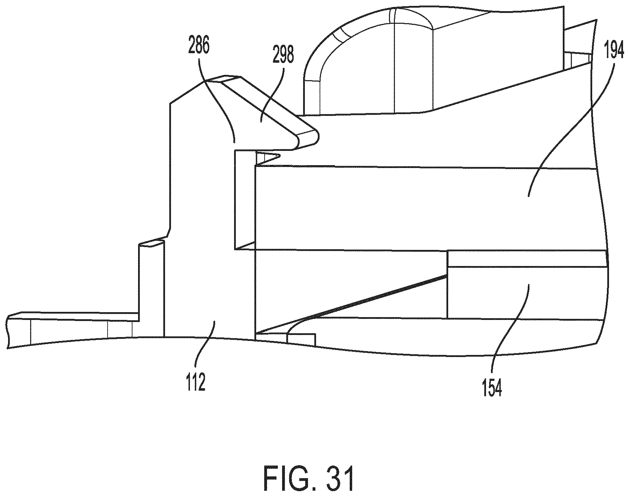

FIG. 31 is a detailed view of the core box circuit board snap fit feature.

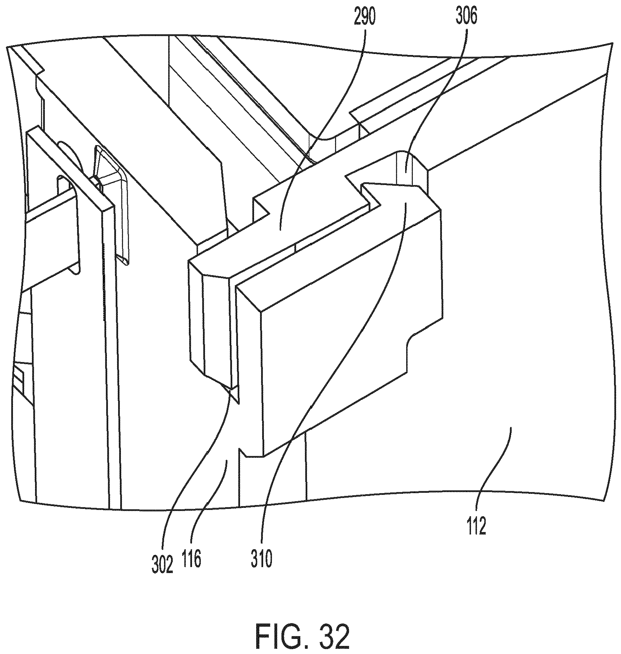

FIG. 32 is a detailed view of the core box end plate snap fit feature.

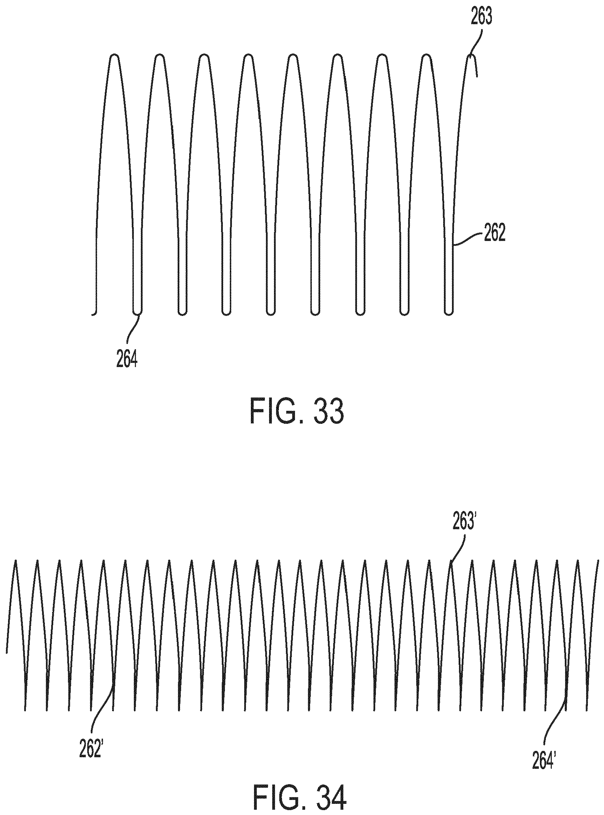

FIG. 33 is a detailed view of an oscillating weld.
FIG. 34 is a detailed view of another oscillating weld.

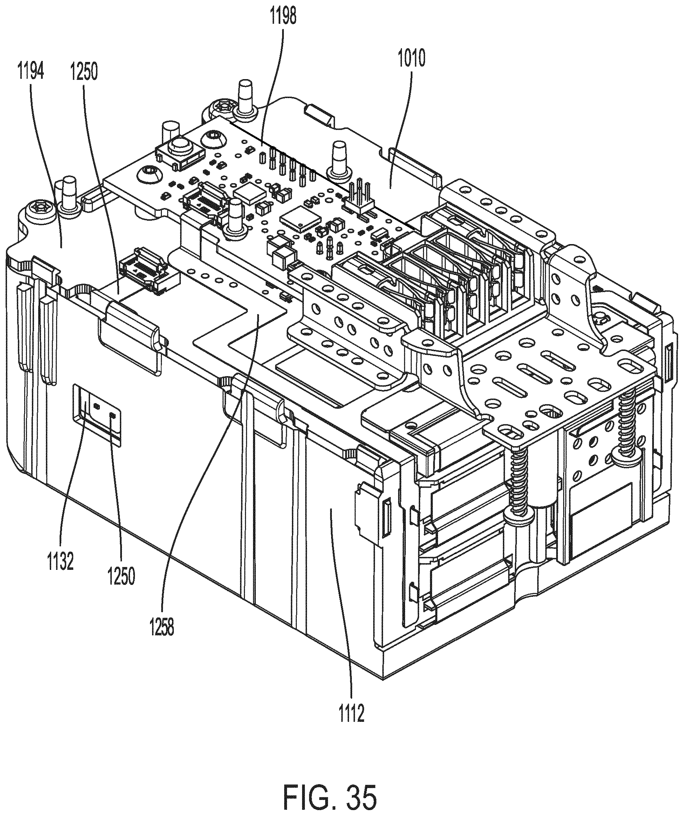

FIG. 35 is a perspective view of another embodiment of a battery pack with the housing removed.

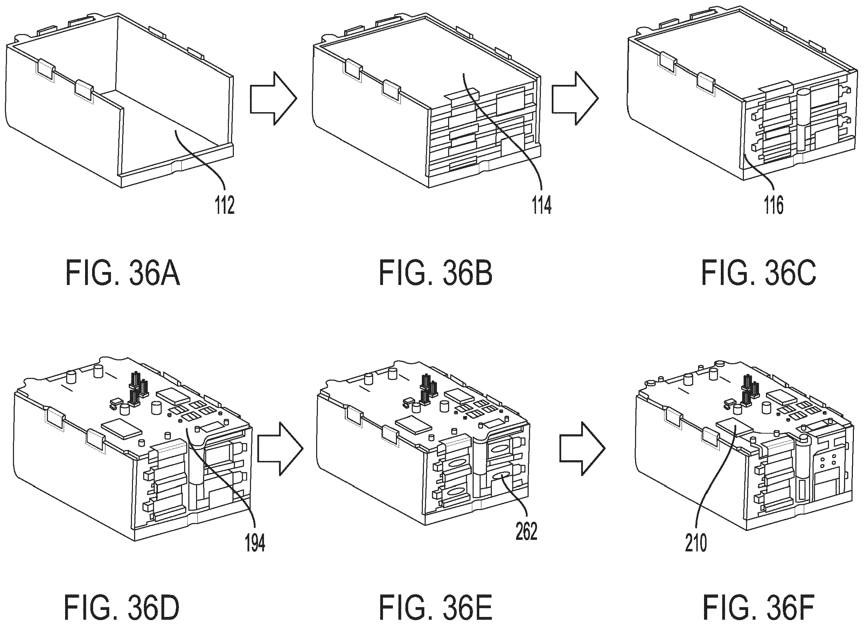

FIGS. 36A-36L illustrate the assembly process of the battery pack of FIG. 1.

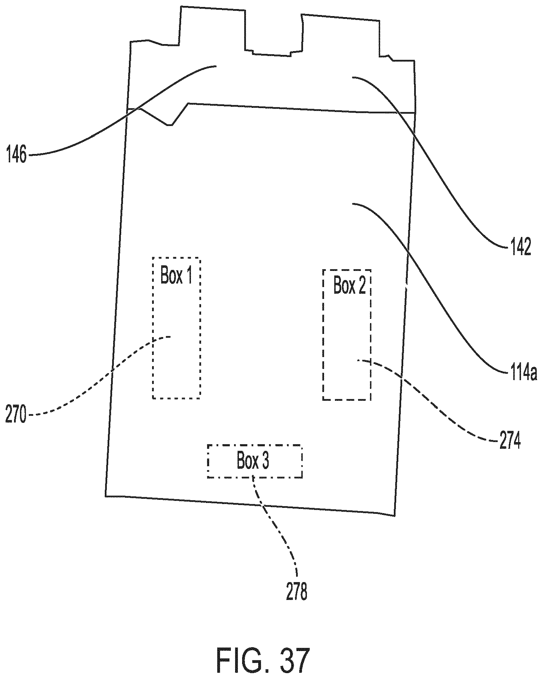

FIG. 37 is top view of a battery cell of the battery pack of FIG. 1.

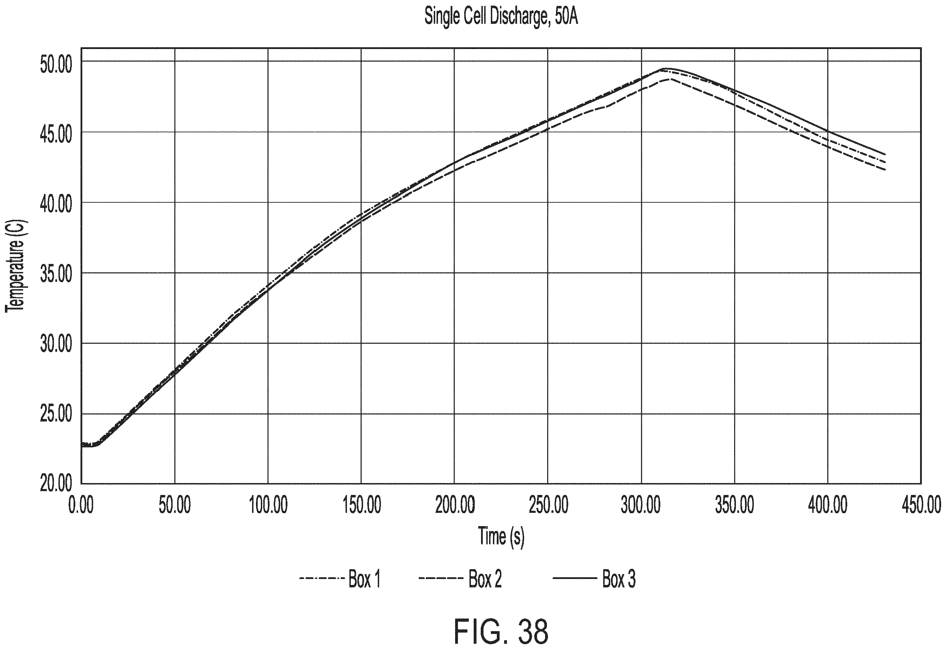

FIG. 38 is a heat graph of the battery cell of FIG. 32 when the battery is being discharged.

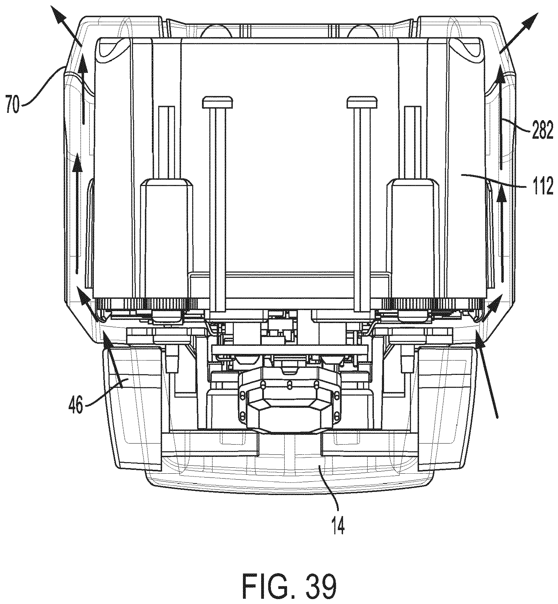

FIG. 39 illustrates the airflow in the battery pack of FIG. 1 during charging.

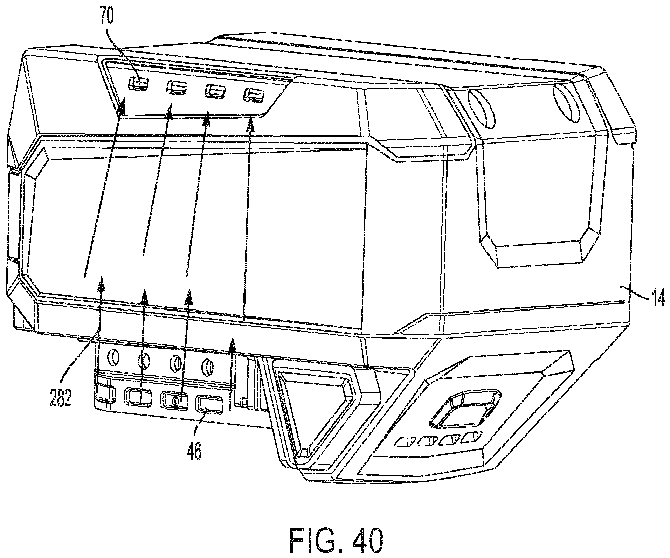

FIG. 40 illustrates the airflow in the battery pack of FIG. 1 during charging.

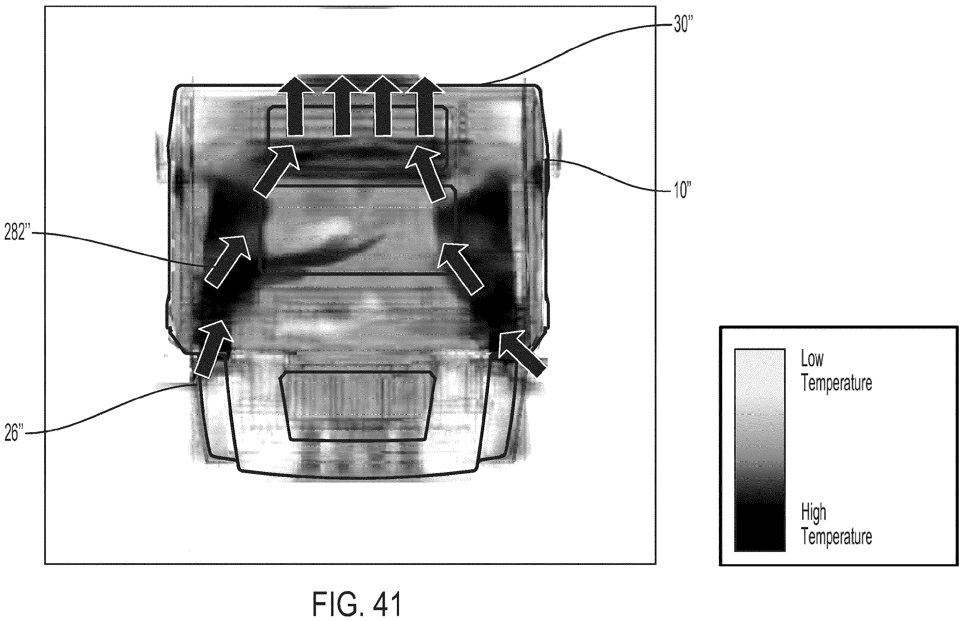

FIG. 41 illustrates the airflow in a battery pack of a different embodiment during charging.

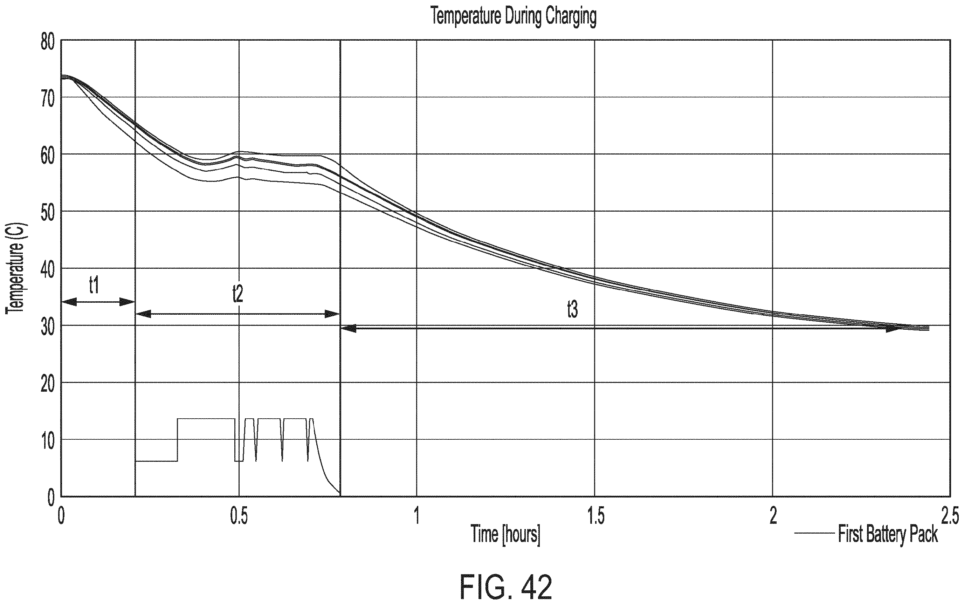

FIG. 42 is a graph showing the temperature of a battery pack with no vents during the charging process.

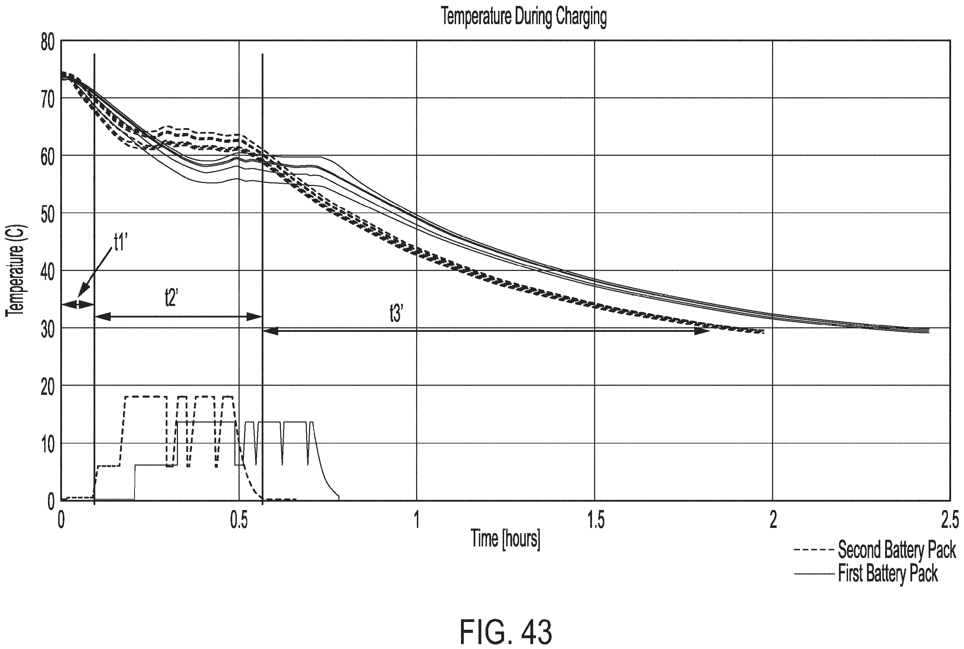

FIG. 43 is a graph showing the temperature of a battery pack with vents during the charging process.

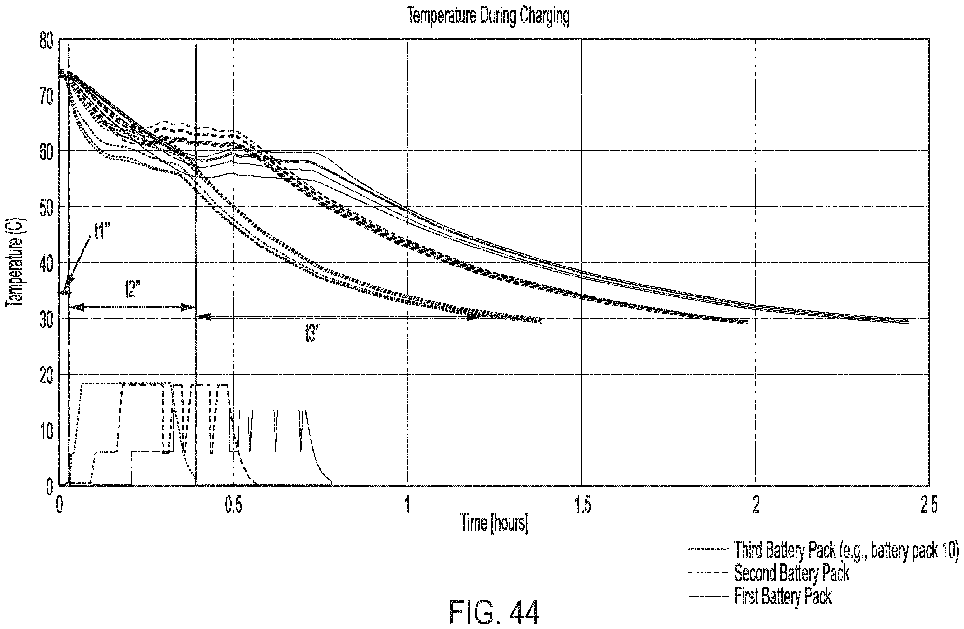

FIG. 44 is a graph showing the temperature of the battery pack of FIG. 1 during the charging process.

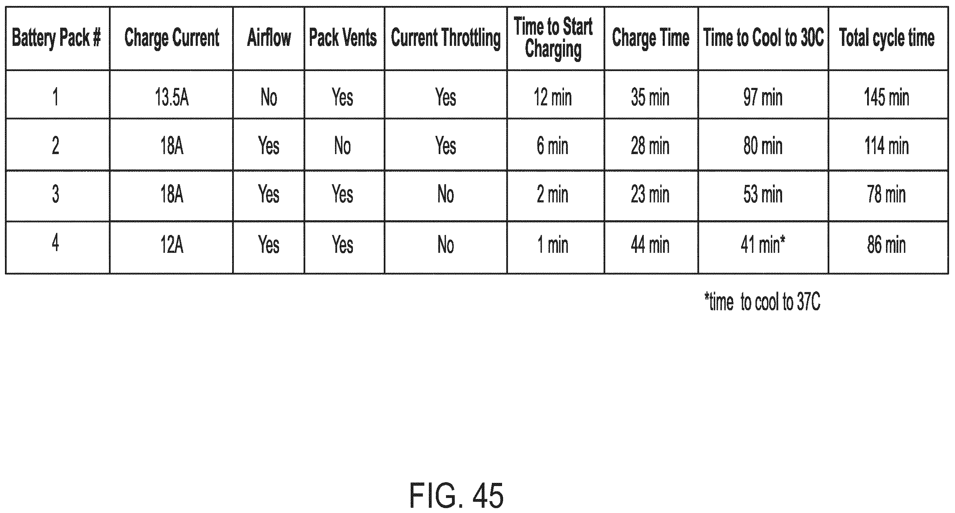

FIG. 45 is chart comparing the charging process of different battery packs.

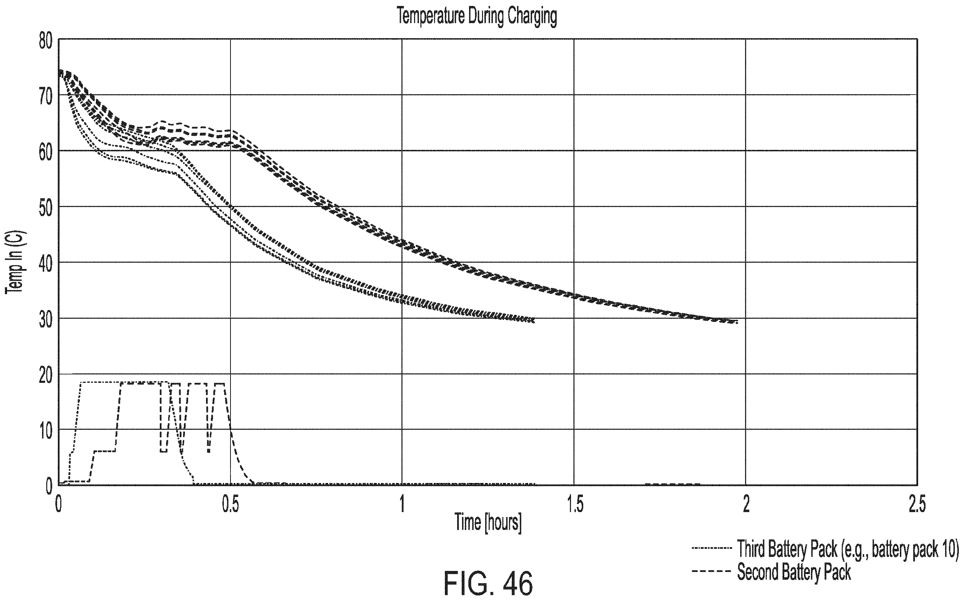

FIG. 46 is a graph comparing the temperature of different battery packs during the charging process.

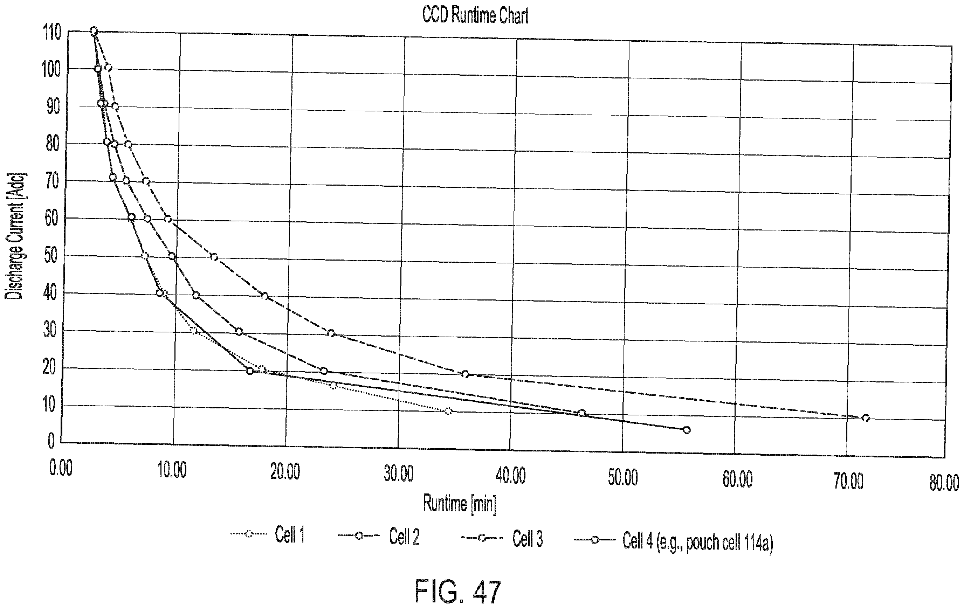

FIG. 47 is a graph comparing run times of different battery packs during discharge.

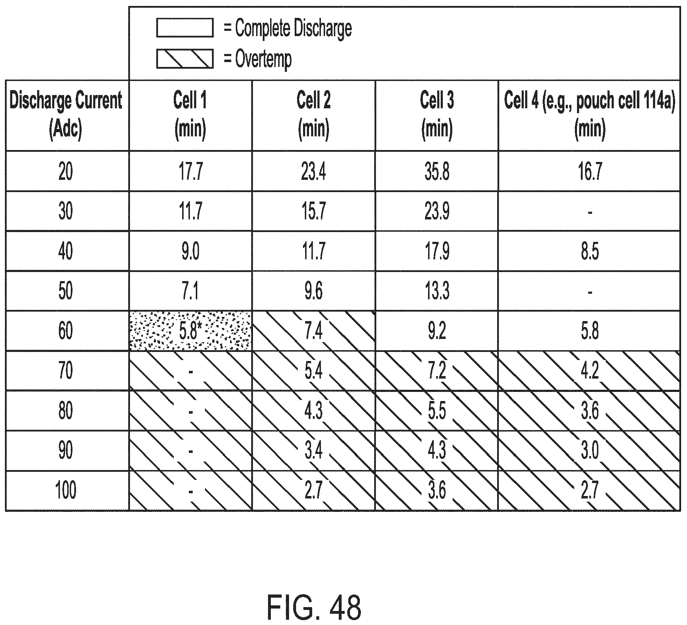

FIG. 48 is a chart comparing run times of different battery packs during discharge.

Other features and aspects of the disclosure will become apparent by consideration of the following detailed description and accompanying drawings.

### DETAILED DESCRIPTION

Before any embodiments of the disclosure are explained in detail, it is to be understood that the disclosure is not limited in its application to the details of construction and the arrangement of components set forth in the following description or illustrated in the drawings. The disclosure is capable of other embodiments and of being practiced or of being carried out in various ways. Also, it is to be understood that the phraseology and terminology used herein is for the purpose of description and should not be regarded as limiting.

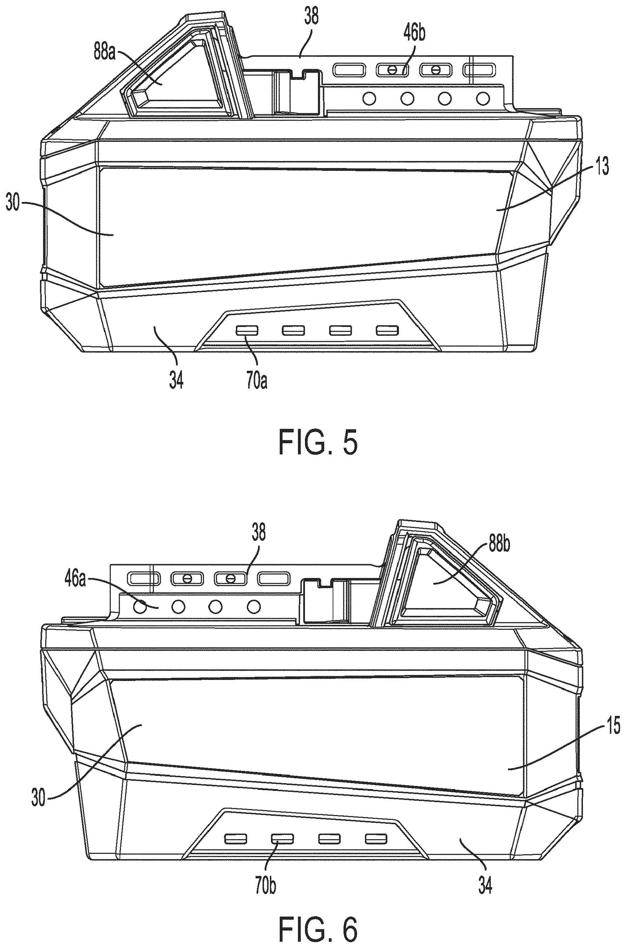

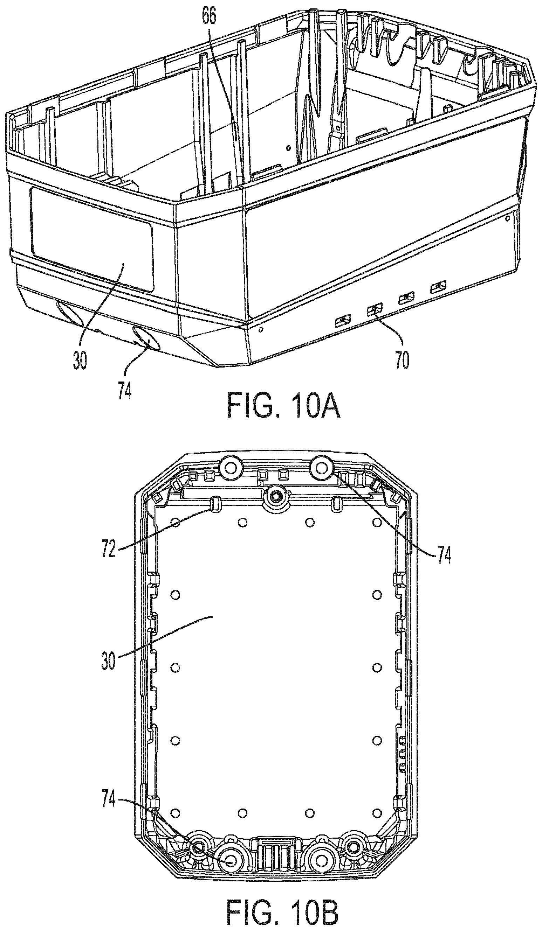

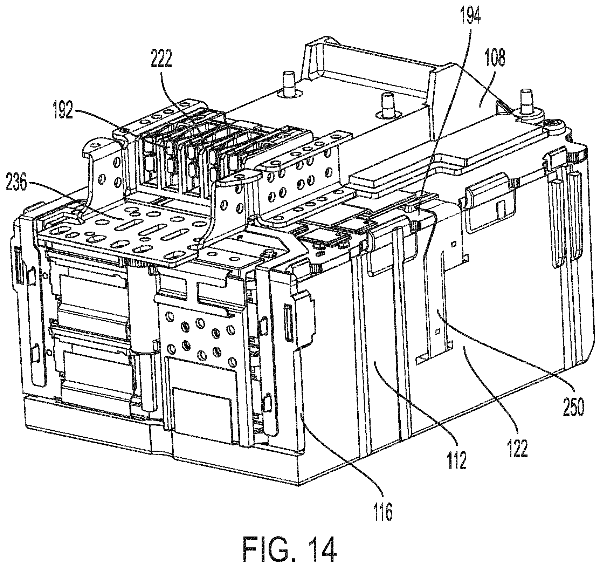

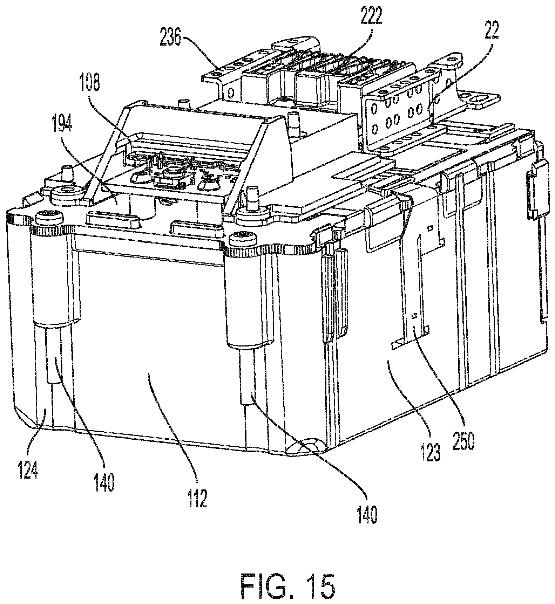

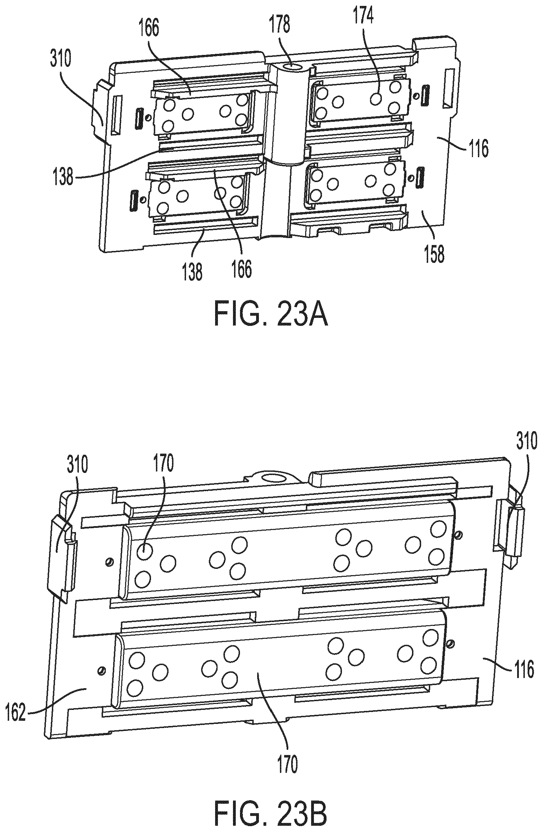

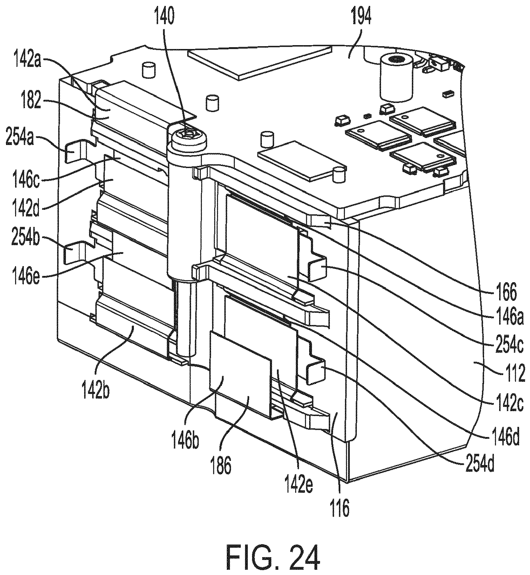

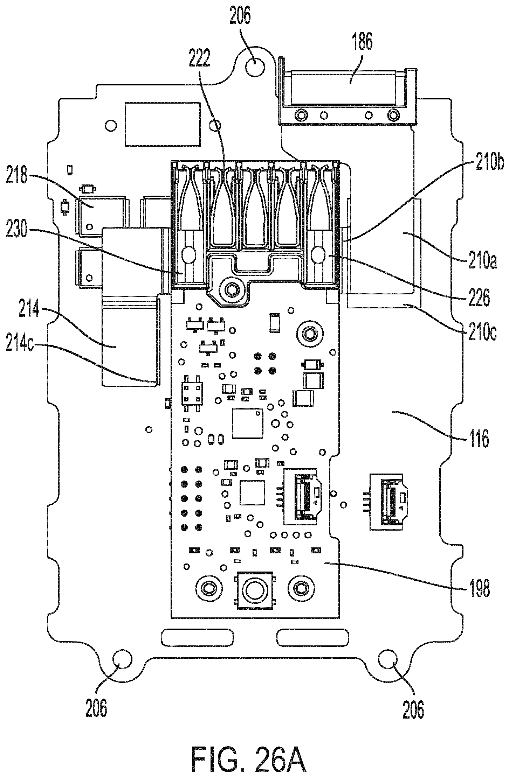

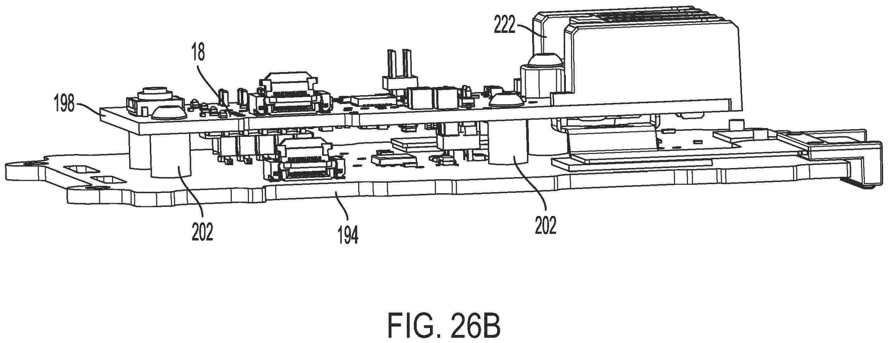

With reference to FIGS. 1-21 and 23-30, a first embodiment of a battery pack 10 is shown. The battery pack 10 is a rechargeable battery pack that is configured to selectively supply power to an electrical device (e.g., a power tool). The battery pack 10 can be removed from the electrical device to be charged by a charger. The battery pack 10 includes a housing 14, a battery module 18 disposed in the housing 14, and a circuit module 22. The battery pack 10 may have a total height between 90 mm and 70 mm. More specifically, the battery pack 10 may have a total height between 85 mm and 75 mm. More specifically, the battery pack 10 may have a total height of 80 mm.

The housing 14 of the battery pack 10 may include a first housing piece 26 (e.g., a top housing piece), a second housing piece 30 (e.g., a middle housing piece), and a third housing piece 34 (e.g., a bottom housing piece). The housing pieces 26, 30, 34 are coupled together to support the battery module 18 and the circuit module 22. The housing 14 may be formed from a first material (e.g., GF Nylon) that is chemically resistant and a second material that absorbs impact if the battery pack 10 is dropped.

The housing 14 may define a first end 12 (e.g., a front end), a second end 16 (e.g., a back end) opposite the first end 12, a first side 13, and a second side 15 opposite the first side 13. In the illustrated embodiment, the first end 12 and the second end 16 are shorter than the first side 13 and the second side 15.

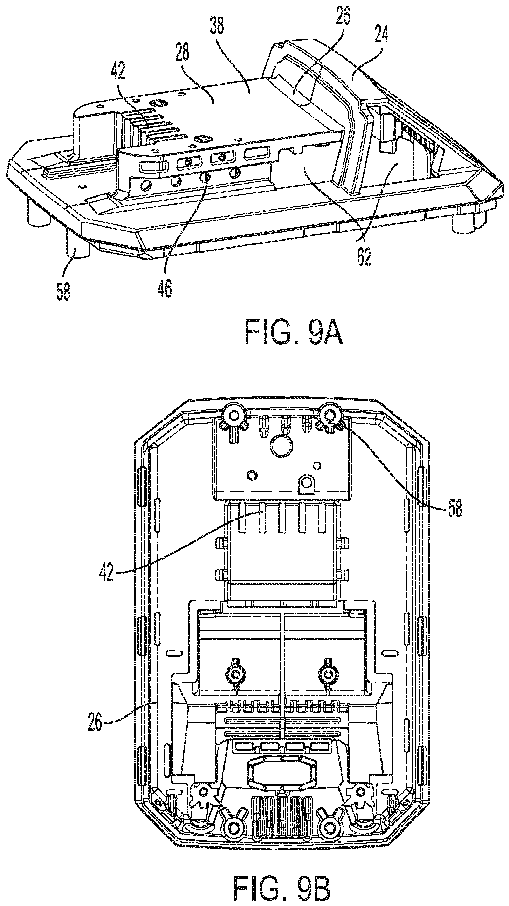

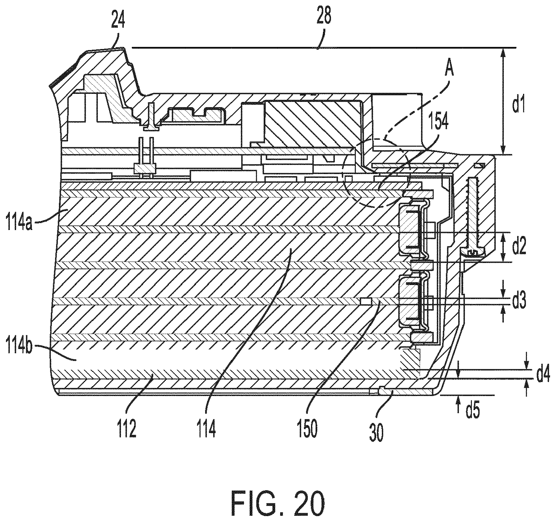

With reference to FIGS. 9A-9C, the first housing piece 26 includes a slanted area 24 and a raised area 28. The slanted area is adjacent the first end 12 of the battery pack 10, and the raised area 28 is adjacent the second end 16 of the battery pack. The first housing piece 26 has a total height of d1 (FIG. 20). The total height d1 is measured from the top of the slanted area 24. The total height d1 may be between 30 mm and 20 mm. The total height d1 may be between 28 mm and 24 mm. The total height d1 may be between 26 mm and 25 mm. The total height d1 may be 25.4 mm.

The first housing piece 26 may have a thickness (excluding the slanted area 24 and the raised area 28) of d5 (FIG. 20). The thickness d5 may be between 1 mm and 3 mm. The thickness d5 may be between 1.5 mm and 2.5 mm. The thickness d5 may be 2 mm.

The first housing piece 26 includes tool interface 38 disposed on the raised area 28. The tool interface 38 is configured to physically couple to the electrical device and to the charger. The tool interface 38 includes a set of terminal openings 42 that at least partially expose a set of battery pack terminals (described below in detail). The set of terminal openings 42 allow the electrical device and the charger to be electrically coupled to the battery pack 10, and more specifically electrically coupled to the battery pack terminals of the battery pack 10. The tool interface 38 may further include guides 54 that allow the battery pack 10 to be easily inserted and removed from the electrical device.

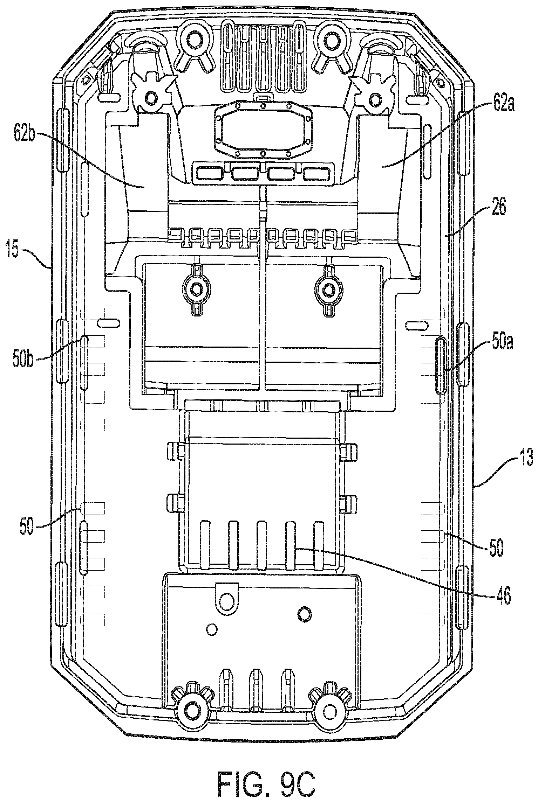

The first housing piece 26 further includes a plurality of air inlets that allow air to enter the battery pack 10 and cool the battery pack 10. More specifically, the first housing piece 26 may include a first set of air inlets 46 that are located on the tool interface 38 and a second set of air inlets 50 (FIG. 9C) that extend along the length of the first housing piece 26. The first set of air inlets 46 includes a first group of air inlets 46a on one side of the tool interface 38 and a second group of air inlets 46b on the other side of the tool interface 38. The first set of air inlets 46 may be comprised of a plurality of circular or slot shaped openings. The second set of air inlets 50 includes a first group of air inlets 50a that extend along the first side 13 and a second group of air inlets 50b that extend along the second side 15. The second set of air inlets 50 are comprised of a plurality of slot shaped openings.

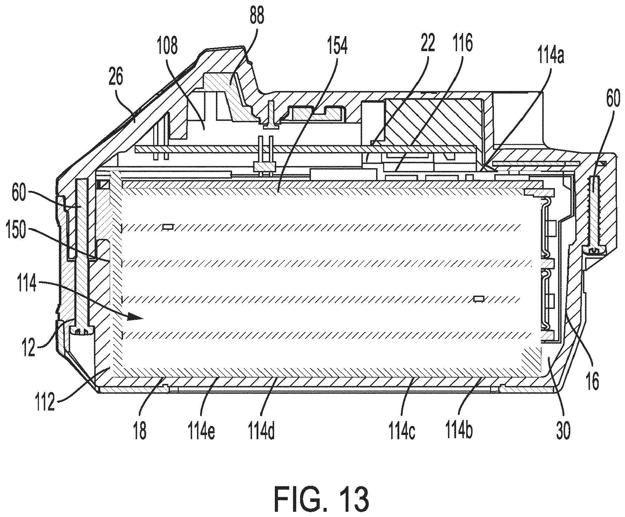

The first housing piece 26 may further include a plurality of bores 58 (e.g., screw holes). The plurality of bores 58 are configured to receive a fastener 60 (FIG. 13) to couple the first housing piece 26 to the second housing piece 30. In the illustrated embodiment, the fasteners 60 are screws. In the illustrated embodiment, the plurality of bores 58 includes two bores located adjacent the first end 12 and two bores located adjacent the second end 16. In other embodiments, the first housing piece 26 may have fewer or more bores.

The first housing piece 26 may also include a set of openings 62 that are configured to receive a pair of grip members (described in detail below). The openings 62 include a first opening 62a on one side of the tool interface 38 and a second opening 62b on the other side of the tool interface 38. The openings 62a, 62b may be disposed between the slanted area 24 and the raised area 28. More specifically, part of the openings 62a, 62b may be disposed on the slanted area 24 and part of the openings 62a, 62b may be disposed on the raised area 28.

The second housing piece 30 is situated between the first housing piece 26 and the third housing piece 34. The second housing piece 30 forms a recess 66 that supports the battery module 18. The bottom wall of the second housing piece may have a thickness of d5. The thickness d5 may be between 1 mm and 5 mm. The thickness d5 may be between 3 mm and 4 mm. The thickness d5 may be 3.5 mm.

The second housing piece 30 includes a plurality of air outlets 70 that allow the cooling air to exit the battery pack 10. The plurality of air outlets 70 include a first set of air outlets 70a disposed along the first side 13 of the housing 14 and a second set of air outlets 70b that are disposed along the second side 15 of the housing 14. The plurality of air outlets 70 may be comprised of a plurality of slot shaped, circular, rectangular, or oval openings.

The second housing piece 30 may also include ingress openings 72. The ingress openings 72 allow water to exit the battery pack 10 if water has entered the battery pack 10. The ingress openings 72 are smaller than the air outlets 70. The ingress openings 72 may be disposed near the first end 12 and second end 16 of the housing 14. In the illustrated embodiment, the battery pack 10 includes four ingress openings 72, however other embodiments may have fewer ore more ingress openings.

The second housing piece 30 further includes a plurality of bores 74 (e.g., screw holes) that are configured to receive the fasteners 60. The plurality of bores 74 are configured to align with the plurality of bores 58 of the first housing piece 26.

The third housing piece 34 is coupled to the second housing piece 30. The third housing piece 34 may not fully cover the second housing piece 30. The third housing piece 34 includes a plurality of bores 78 configured to receive a fastener, a plurality of air outlets 82, and ingress openings 80. The plurality of bores 78 aligns with the plurality of bores 74 of the second housing piece 30. The set of air outlets 82 aligns with the plurality of air outlets 70 of the second housing piece 30. The ingress openings 80 align with the ingress openings 72 of the second housing piece 30.

The housing 14 may further include a status indicator 100 and a fuel gauge button 104. The status indicator 100 may be a set of LED lights. The status indicator 100 may indicate the charge level or the health of the battery pack 10. For example, the status indicator 100 may be green if the battery pack 10 is fully charged, or the status indicator 100 may be red if the battery pack 10 has low battery. The status indicator 100 is disposed on the slanted area 24 of the first housing piece 26.

The fuel gauge button 104 is disposed adjacent the status indicator 100 on the slanted area 24 of the first housing piece 26. The fuel gauge button 104 allows the user to depress the fuel gauge button 104 to check the status of the battery pack 10. The status of the battery pack 10 is displayed on the status indicator 100. The fuel gauge button 104 can be used when the battery pack 10 is not connected to the electrical device or the charger.

The housing 14 also includes a set of grips 88. The set of grips 88 include a first grip 88a disposed in the first opening 62a and a second grip 88b disposed in the second opening 62b. The set of grips 88 allows a user to easily hold the battery pack 10 and insert the battery pack 10 into the electrical device.

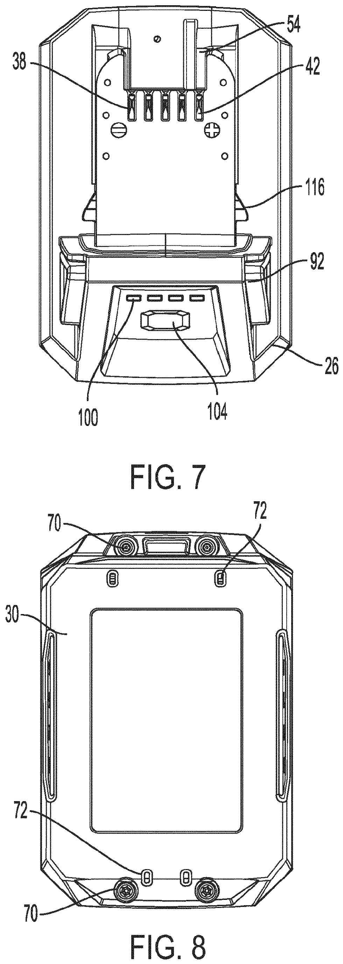

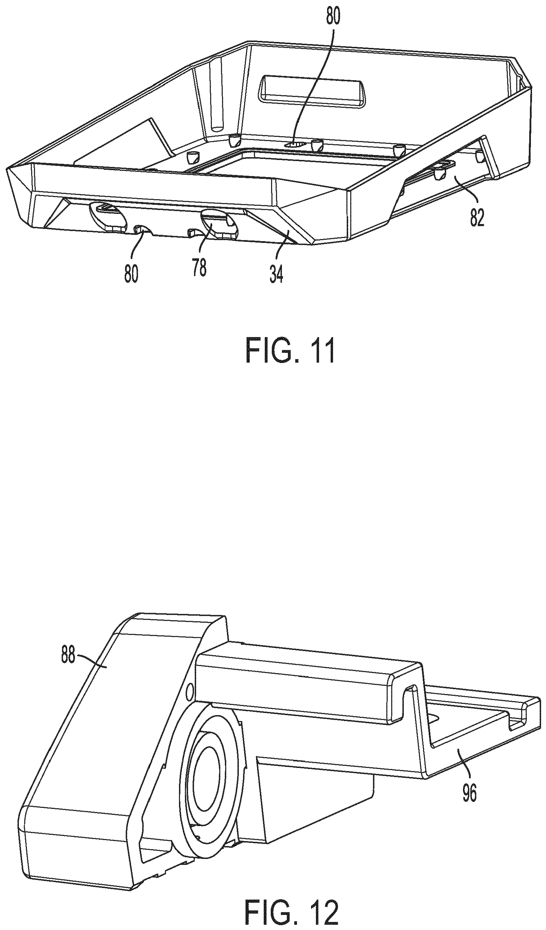

With reference to FIGS. 7 and 12, the grips 88a, 88b include a compressible portion 92 and a contact plate 96. The contact plate 96 contacts the first housing piece 26 when the compressible portion 92 is compressed. The compressible portion 92 may be compressed by the user to allow the battery pack 10 to be inserted into the electrical device. The compressible portion 92 is compressed in a direction perpendicular to the direction of insertion of the battery pack 10. The grips 88a, 88b may further include a spring (not shown) that biases the compressible portion 92 to the uncompressed state. Once the battery pack 10 is inserted into the electrical device, the compressible portion 92 is uncompressed such that the battery pack 10 is secured to the electrical device and cannot be removed from the electrical device.

The battery pack 10 may include a grip cover 108 (FIGS. 13-16) disposed between the first housing piece 26, the battery module 18, and the circuit module 22. More specifically, the grip cover 108 is disposed between the set of grips 88 and the circuit module 22. The grip cover 108 covers the circuit module 22 and protects the circuit module 22 (and the other battery pack internals) from ingress when the grips 88a, 88b are compressed. The grip cover 108 may include bores that allow the grip cover 108 to be secured to part of the circuit module 22.

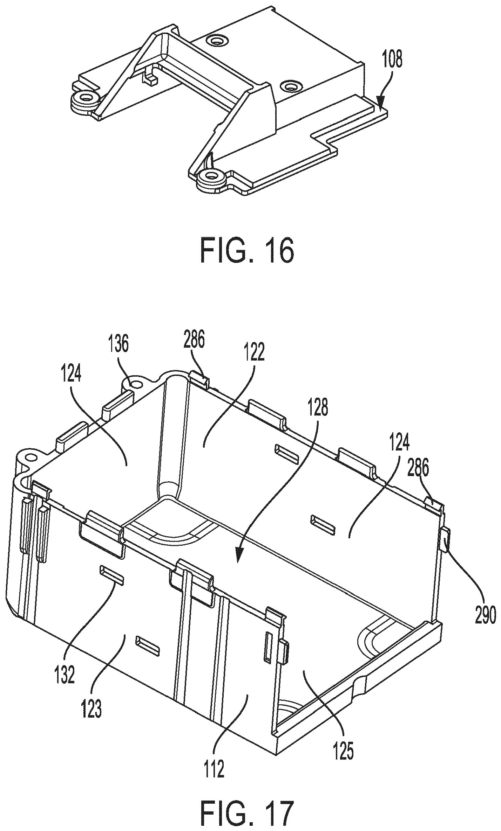

Turning to FIGS. 17-20, the battery module 18 includes a core box 112, a stack of pouch cells 114 supported by the core box 112, and an end plate 116. The core box 112 is disposed in the recess 66 of the second housing piece 30.

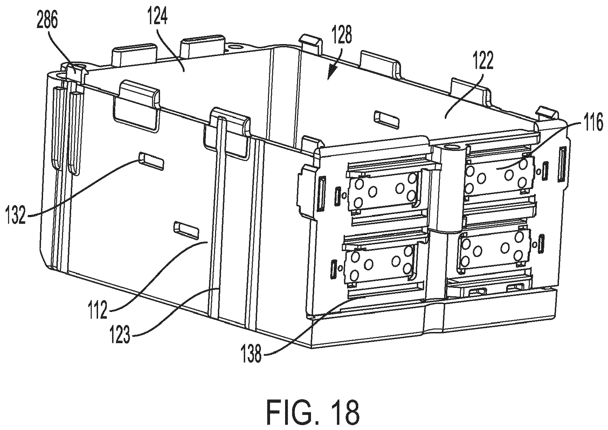

With reference to FIGS. 17 and 18, the core box 112 includes a first side wall 122, a second side wall 123 opposite the first side wall 122, and a third side wall 124. The first side wall 122 is adjacent the first side 13, the second side wall 123 is adjacent the second side 15, and the third side wall 124 is adjacent the first end 12. The core box 112 also includes a support surface 125. The support surface 125 contacts the second housing piece 30. The side walls 122, 123, 124 and the support surface 125 form a recess 128 that receives the stack of pouch cells 114.

The core box 112 includes at least one opening 132 disposed on the first side wall 122 and the second side wall 123. The opening 132 may allow a sensor (e.g., a thermistor) to access the middle of the stack of pouch cells 114. The opening 132 may be slot shaped or rectangular. In the illustrated embodiment, the core box 112 includes two slot shaped openings 132 on each of the first side wall 122 and the second side wall 123.

The core box 112 may further includes bores 136 (e.g., screw holes) that are configured to receive a fastener 140 (e.g., a vertical screw). The fastener 140 couples the core box 112, to the circuit module 22. The bores 136 are disposed on the third side wall 124. The illustrated embodiment includes two bores 136, however there may be fewer or more bores 136 in other embodiments.

The core box 112 may have a total height between 60 mm and 30 mm. More specifically, the core box 112 may have a total height between 50 mm and 40 mm. Even more specifically, the core box 112 may have a total height of 45.5 mm. The core box 112 has a height that is greater than 50% of the total height of the battery pack 10. More specifically, the core box 112 has a height that is greater than 55% of the total height of the battery pack 10. Even more specifically, the core box 112 has a height that is greater than 56% of the total height of the battery pack 10.

The support surface 125 of the core box 112 has a thickness of d4 (FIG. 20). The thickness d4 may between 0.5 mm and 3 mm. More specifically, the thickness d4 of the core box 112 may be between 1 mm and 2.5 mm. Even more specifically, the thickness d4 of the core box 112 2 mm.

The stack of pouch cells 114 are supported by the support surface 125 of the core box 112. More specifically, the stack of pouch cells 114 are positioned on the support surface 125 of the core box 112. The stack of pouch cells 114 include a plurality of pouch cells. More specifically, the stack of pouch cells 114 may include at least a first pouch cell 114a (e.g., a top pouch cell) and a second pouch cell 114b (e.g., a bottom pouch cell or the pouch cell farthest from the circuit board). The illustrated embodiment includes five pouch cells, however the battery pack 10 may include fewer or more pouch cells.

Each of the pouch cells (e.g., the first pouch cell 114a and the second pouch cell 114b) in the stack of pouch cells 114 may have a thickness of d2. The thickness d2 may be between 5 mm and 8 mm. More specifically, the thickness d2 of the pouch cell may be between 6 mm and 7 mm. More specifically, the thickness d2 may be 6.8 mm.

In the illustrated embodiment, the stack of pouch cells 114 has a total height between 50 mm and 20 mm. More specifically, the stack of pouch cells 114 has a total height between 40 mm and 30 mm. Even more specifically, the stack of pouch cells 114 has a total height of 34 mm. The stack of pouch cells 114 has a height that is greater than 30% of the total height of the battery pack 10 and greater than 60% of the total height of the core box 112. More specifically, the stack of pouch cells 114 has a height that is greater than 40% of the total height of the battery pack 10 and greater than 70% of the total height of the core box 112. Even more specifically, the stack of pouch cells 114 has a height that is greater than 42% of the total height of the battery pack 10 and greater than 74% of the total height of the core box 112.

Each of the pouch cells in the stack of pouch cells 114, include a first cell tab 142 and a second cell tab 146. The first and second cell tabs 142, 146 extend from a common side of the pouch cell (e.g., the side adjacent the second end 16 when the stack of pouch cells 114 is disposed in the battery pack 10). The first cell tab 142 may be a positive cell tab. The first cell tab 142 may be formed from copper and have a tensile strength between 145 lbf (645 N) and 160 lbf (712 N). More specifically, the first cell tab 142 may have a tensile strength between 150 lbf (667 N) and 155 lbf (690 N). More specifically, the first cell tab 142 may have a tensile strength of 153.6 lbf (683.2 N). The second cell tab 146 may be a negative cell tab. The second cell tab 146 may be formed from aluminum and may have a tensile strength between 50 lbf (222 N) and 65 lbf (289 N) and have a weld shear strength between 40 lbf (177 N) and 55 lbf (245 N). More specifically, the second cell tab 146 may have a tensile strength between 55 lbf (245 N) and 60 lbf (267 N) and have a weld shear strength between 45 lbf (200 N) and 50 lbf (222 N). More specifically, the second cell tab 146 may have a tensile strength of 57.9 lbf (257 N) and a weld shear strength of 48.19 lbf (214.4 N). The cell tabs 142, 146 may be flexible such that they can be folded.

The first pouch cell 114a is the top battery cell such that the first pouch cell 114a is positioned adjacent the circuit module 22. The second pouch cell 114b is stacked between the first pouch cell 114a and the support surface 125 of the core box 112. The second pouch cell 114b is the bottom battery cell such that second pouch cell 114b is adjacent the support surface 125. In the illustrated embodiment, the stack of pouch cells 114 further includes a third pouch cell 114c positioned directly below the first pouch cell 114a, a fourth pouch cell 114d positioned directly below the third pouch cell 114c, and a fifth pouch cell 114e arranged directly below the fourth pouch cell 114d and directly above the second battery cell 114b.

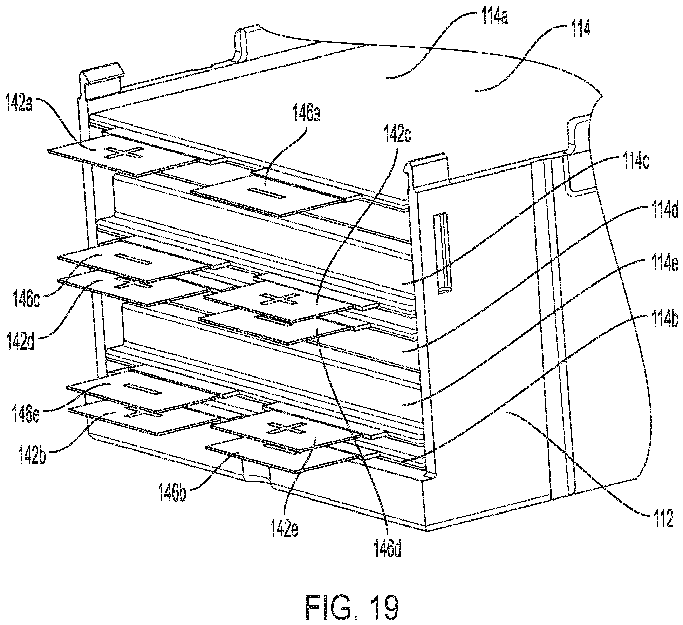

With reference to FIG. 19, the pouch cells in the stack of pouch cells 114 are arranged in an alternating pattern. For example, the first cell tab 142a of the first pouch cell 114a, the first cell tab 142d of the fourth pouch cell 114d, and the first cell tab 142b of the second pouch cell 114b are adjacent the second side 15, while the first cell tab 142c of the third pouch cell 114c and the first cell tab 142e of the fifth pouch cell 114e are adjacent the first side 13 of the battery pack 10. Additionally, the second cell tab 146a of the first pouch cell 114a, the second cell tab 146d of the fourth pouch cell 114d, and the second cell tab 146b of the second pouch cell 114b are adjacent the first side 13, while the second tab 146c of the third pouch cell 114c and the second cell tab 146e of the fifth pouch cell 114e are adjacent the second side 15 of the battery pack 10. The alternating pattern allows the stack of pouch cells 114 to be electrically connected in a serpentine pattern (described below in detail).

The end plate 116 is coupled to the core box 112. More specifically, the end plate 116 is coupled to the core box 112 opposite the third side wall 124 such that the end plate 116 is adjacent the second end 16. In the illustrated embodiment, the end plate 116 is snap fitted (e.g., with a detent mechanism) to the core box 112, as shown in FIG 32. More specifically, the core box 112 includes a projection 290 and a slot 306 adjacent the projection, while the end plate 116 includes a groove 302 and a projection 310. The slot 306 is a vertical slot and extends in the vertical direction between the first housing piece 26 and the second housing piece 30. The groove 302 is a horizontal groove and extends in an axial direction between the first end 12 and the second end 16. The projection 310 is a hook or a cantilever. When the end plate 116 is coupled to the core box 112, the projection 290 of the core box 112 is received in the groove 302 of the end plate 116, and the projection 310 of the end plate 116 is received in the slot 306 of the core box 112. The snap fit limits the axial movement of the end plate 116 relative to the core box 112. In the illustrated embodiment, there are two snap fits that couple the end plate 116 to the core box 112, however in other embodiments there may be more snap fits. The end plate 116 and the core box 112 at least partially enclose the stack of pouch cells 114.

The end plate 116 includes a first face 158, a second face 162, and a set of slots 138 that extend from the first face 158 to the second face 162. The first face 158 is adjacent the second end 16 of the battery pack 10 and the second face 162 is adjacent the stack of pouch cells 114. The set of slots 138 align with the cell tabs 142, 146 of the pouch cells in the stack of pouch cells 114 such that the cell tabs 142, 146 extend through the slots 138.

The first face 158 includes a set of ledges 166 that is positioned adjacent the set of slots 138, a set of recesses 174, and a bore 178. The set of ledges 166 extends toward the second end 16. The set of ledges 166 prevent the terminal tabs from touching each other and short circuiting. The set of recesses 174 is a set of recessed surfaces can receive a sensor (e.g., a voltage tap) that measures the discharge conditions of each battery cell. The bore 178 (e.g., a screw hole) allows the end plate 116 to be coupled to the circuit module 22 when a fastener (e.g., a screw) is received in the bore 178.

The second face 162 includes contact surface 170. The contact surface 170 extend toward the stack of pouch cells 114. The contact surface 170 contact the stack of pouch cells 114 to stabilize the stack of pouch cells 114.

The cell tabs 142, 146 of the pouch cells 114a-114e are electrically connected to each other outside of the end plate 116. Said another way, the cell tabs 142, 146 of the pouch cells 114a-114e are electrically connected to each other between the end plate 116 and the second end 16 of the battery pack 10. The cell tabs 142, 146 are electrically connected by folding the cell tabs 142, 146 on top of each other and against the end plate 116.

The stack of pouch cells 114 are connected in series such that an electrical pathway through the stack of pouch cells 114 is in a serpentine pattern. More specifically, the first cell tab 142b of the second pouch cell 114b (located on the second side 15) is connected to the second cell tab 146e of the fifth pouch cell 114e (located on the second side 15); the first cell tab 142e of the fifth pouch cell 114e (located on the first side 13) is connected to the second cell tab 146e of the fourth battery cell 114d (located on the first side 13); the first cell tab 142d of the fourth battery cell 114d (located on the second side 15) is connected to the second cell tab 146c of the third battery cell 114c (located on the second side 15); and the first cell tab 142c of the third battery cell 114c (located on the first side 13) is electrically connected to the second cell tab 146a of first battery cell 114a. Welds 262 (FIG. 32E) may secure the cell tabs 142, 146 to each other. These connections form an electrical pathway having a serpentine pattern. The stack of pouch cells 114 are electrically connected such that the first cell tab 142a of the first pouch cell 114a is electrically connected to the second cell tab 146b of the second pouch cell 114b.

The first cell tab 142a of the first pouch cell 114a acts as a first leading tab 182 and the second cell tab 146b of the second pouch cell 114b acts as a second leading tab 186. The first and second leading tabs 182, 186 electrically connect the stack of pouch cells 114 to the circuit module 22.

The battery module 18 may further include a resilient layer 150 disposed between at least some of the cells in the stack of pouch cells 114. The resilient layer 150 may be a foam expansion pad that is able to compress, an air gap, or a bi-material spacer that is able to compress. The resilient layer 150 allows for the pouch cells 114a-114e to expand. In the illustrated embodiment, the battery module 18 includes a resilient layer 150 between all of the adjacent pouch cells (e.g., the first pouch cell 114a and the third pouch cell 114c) of the stack of pouch cells 114. In some of the embodiments, there may be a resilient layer 150 between only some of the cells in the stack of pouch cells 114. For example, there may only be a resilient layer 150 between the first pouch cell 114a and the third pouch cell 114c and between the fifth pouch cell 114e and the second pouch cell 114b.

The resilient layer 150 has a thickness d3. The thickness d3 of the resilient layer 150 may be between 1 mm and 3 mm. More specifically, the thickness d3 of the resilient layer 150 may be between 1 mm and 2 mm. Even more specifically, the thickness d3 of the resilient layer 150 may be 1.5 mm. In the illustrated embodiment, the stack of pouch cells 114 including the resilient layers 150 has a height that is greater than 40% of the total height of the battery pack 10, and greater than 75% of the total height of the core box 112. More specifically, the stack of pouch cells 114 including the resilient layers 150 has a height that is greater than 45% of the total height of the battery pack 10, and greater than 80% of the total height of the core box 112. Even more specifically, the stack of pouch cells 114 including the resilient layers 150 has a height that is greater than 50% of the total height of the battery pack 10, and greater than 87% of the total height of the core box 112.

In some embodiments, the battery pack 10 may have a resilient layer disposed between the second pouch cell 114b and the support surface 125. In other embodiments, the battery pack 10 may have a resilient layer between the stack of pouch cells 114 and the first and/or second side wall 122, 123 of the core box 112.

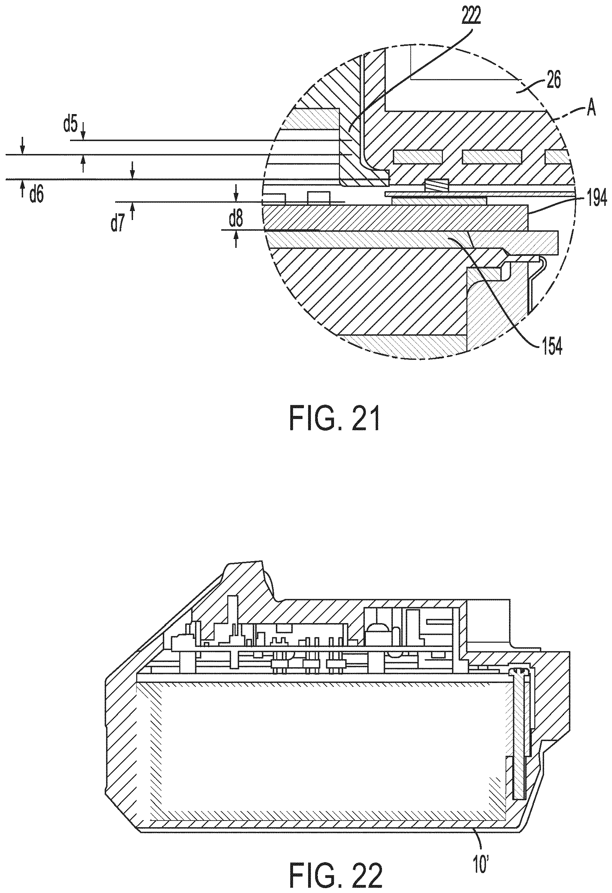

FIG. 22 illustrates another embodiment of a battery pack 10'. The battery pack 10' is similar to the battery pack 10, however the battery pack 10' is more compact. The battery pack 10' does not include a resilient layer between any of the cells.

The battery module 18 may further include a top resilient layer 154. The top resilient layer 154 is disposed between the first pouch cell 114a and the circuit module 22. The top resilient layer 154 may be the same material and thickness as the resilient layer 150 or the top resilient layer 154 may have a different thickness and may be a different material than the resilient layer 150.

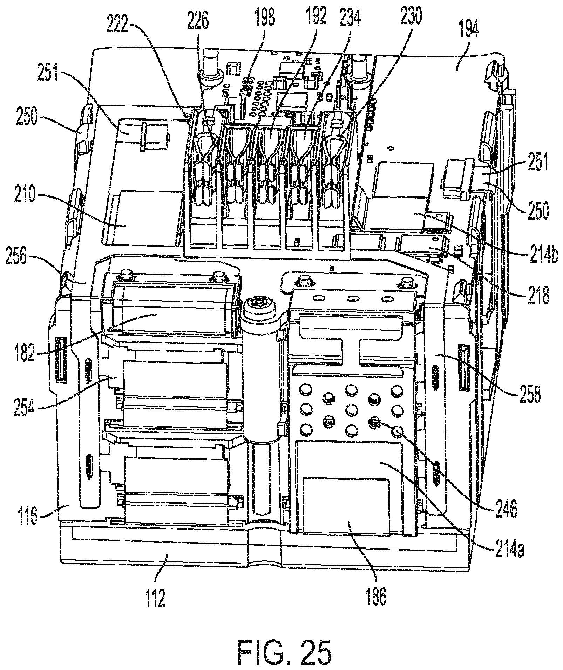

With reference to FIGS. 25-30, the circuit module 22 includes battery pack terminals 192, a first circuit board 194 (e.g., a bottom circuit board), and second circuit board 198 (e.g., a top circuit board) disposed on top of the first circuit board 194.

The battery pack terminals 192 include a first battery pack terminal 226, a second battery pack terminal 230, and a third battery pack terminal 234. The first battery pack terminal 226 is a positive battery terminal. The second battery pack terminal 230 is a negative battery pack terminal. The first and second battery pack terminals 226, 230 are configured to supply to the connected electrical device. The third battery pack terminal 234 is configured to send signals and information to the connected electrical device. The battery pack terminals 192 extend through the terminal openings 42 in the first housing piece 26. In the illustrated embodiment, the battery pack 10 includes three of the third battery pack terminals 234.

With reference to FIGS. 27 and 28, the first battery pack terminal 226 and the second battery pack 230 terminals include a battery connection portion 238 and a tool connection portion 242. The battery connection portion 238 extends downward toward the first circuit board 194 such that the first and second battery pack terminals 226, 230 can electrically couple to the stack of pouch cells 114. The tool connection portion 242 of the battery pack terminals 226, 230 extend in a direction toward a plane that is coplanar with the end plate 116. The first and second battery pack terminals 226, 230 may be formed from EFTEC 97 or EFTEC 550-E.

The first circuit board 194 is positioned above the core box 112. The first circuit board 194 and the core box 112 at least partially enclose the stack pouch cells 114. More specifically, the first circuit board 194 is positioned above the top resilient layer 154 and opposite the support surface 125 of the core box 112. The first circuit board 194 covers the core box 112, such that the core box 112, the first circuit board 194, and the end plate 116 cooperate to form an enclosed space and cooperate to enclose the stack of pouch cells 114. The first circuit board 194 includes bores 206 (e.g., screw holes) that algin with the bores 136 of the core box 112 and bores 178 of the end plate 116 such that the fasteners 140 can secure the first circuit board 194 to the core box 112 and the end plate 116.

With reference to FIG. 31 the first circuit board 194 is secured (e.g., snap fitted) to the core box 112 by at least one snap 286 (e.g., a detent mechanism). In the illustrated embodiment, the core box 112 includes four snaps 286 including two snaps 286 along on the first side wall 122 and two snaps 286 on the second side wall 123 of the core box 112. The snap 286 includes a hook-shaped or a cantilever-shaped projection 298. The hook-shaped projection 298 extends partially along the first circuit board 194 and limits the vertical movement of the first circuit board 194. The hook-shaped projection 298 may be vertically offset from the first circuit board 194 such that there is room for the stack of pouch cells 114 to expand. In other embodiments, the core box 112 may include fewer or more snaps 286.

The first circuit board 194 has a flat, plate shape. The first circuit board 194 may be an aluminum-backed circuit board that has a circuit copper layer, a dielectric layer, and an aluminum layer. The first circuit board 194 may have a thickness of d8. In the illustrated embodiment, the thickness d8 of the first circuit board 194 may be between 1 mm and 3 mm. More specifically, the thickness d8 of the first circuit board 194 may be between 1.5 mm and 2.5 mm. Even more specifically, the thickness d8 of the first circuit board 194 may be 2 mm.

The first circuit board 194 includes power routing elements that electrically connect the stack of pouch cells 114 to the battery pack terminals 192. More specifically, the power routing elements electrically connect the first leading cell tab 182 to the first battery pack terminal 226 and electrically connect the second leading cell tab 186 to the second battery pack terminal 230.

The first leading cell tab 182 is folded over the first circuit board 194 such that at least a portion of the first leading cell tab 182 is disposed on a side of the first circuit board 194 that is opposite the core box 112. The first leading cell tab 182 is coupled to the first battery pack terminal 226 by a terminal bus bar 210 (e.g., a first bus bar). The terminal bus bar 210 is placed directly on top of the first leading cell tab 182 such that the terminal bus bar 210 is directly coupled to the first leading cell tab 182. The first leading cell tab 182 is welded to the terminal bus bar 210 with a weld 266 (FIG. 32I). The weld 266 may be similar to the weld 262 (described in detail below) and have an oscillating shape.

The terminal bus bar 210 may be one monolithic piece, or the terminal bus bar 210 is formed from several sections that are electronically connected. For example, the terminal bus bar 210 includes a first terminal bus bar piece 210a that is connected to the first leading cell tab 182 and a second terminal bus bar piece 210b that is connected to the first terminal bus bar piece 210a and the first battery pack terminal 226. The first terminal bus bar piece 210a may be formed from copper or a copper alloy such as FAS-680. The first terminal bus bar piece 210a may have a thickness between 0.1 mm and 0.4 mm and a weld shear strength between 145 lbf (645 N) and 160 lbf (712 N). More specifically, the first terminal bus bar piece 210a may have a thickness between 0.2 mm and 0.3 mm and a weld shear strength between 150 lbf (667 N) and 155 lbf (690 N). More specifically, the first terminal bus bar piece 210a may have a thickness of 0.25 mm and a weld shear strength of 153.6lbf (683.2 N). The second terminal bus bar piece 210b may be formed from copper or a copper alloy such as C1100. The second terminal bus bar piece 210b may have a thickness between 1 mm and 1.5mm. More specifically, the second terminal bus bar piece 210b may have a thickness between 0.25 mm and 0.75 mm. More specifically, the second terminal bus bar 210b may have a thickness of 0.5 mm. The first terminal bus bar piece 210a is welded to the second terminal bus bar piece 210b with a weld 266.

The first terminal bus bar piece 210a and the second terminal bus bar piece 210b may be electrically connected to a connection pad 210c disposed on the first circuit board 194. The connection pad 210c may be formed from copper or a copper alloy such as C110. The connection pad 210c may have a thickness between 0.2 mm and 1.75 mm. More specifically, the connection pad 210c may have a thickness between 0.5 mm and 1.5 mm. More specifically, the connection pad 210c may have a thickness of 0.58 mm. The connection pad 210c electrically connects the first leading cell tab 182 to the first circuit board 194. The weld 266 may extend through the first terminal bus bar piece 210a, the second terminal bus bar piece 210b, and the connection pad 210c. When the thinner terminal bus bar pieces are used a less powerful laser can be used to weld the terminal bus bar pieces together.

The second leading cell tab 186 is adjacent the support surface 125 of the core box 112. The second leading cell tab 186 is connected to the second battery pack terminal 230 by a terminal bus bar 214 (e.g., a second bus bar). The terminal bus bar 214 includes a first terminal bus bar piece 214a and a second terminal bus bar piece 214b. The first terminal bus bar piece 214a connects the second leading cell tab 186 to the first circuit board 194. The first terminal bus bar piece 214a extends along the end plate 116 and bends over the edge of the first circuit board 194. The first end of the first terminal bus bar piece 214a is welded to the second leading cell tab 186 and the second end of the first terminal bus bar piece 214a is folded over the first circuit board 194 and is welded to the first circuit board 194. Welding the first terminal bus bar piece 214a directly to the first circuit board 194 helps with heatsinking. A separator 246 (e.g., an insulative frame) may be positioned between the first terminal bus bar piece 214a and the cell tabs 142, 146 to prevent short-circuiting. The separator 246 may be formed from an insulating material. The second terminal bus bar piece 214b is connected to the first circuit board 194 and the second terminal 230. Unlike the terminal bus bar 210, the first terminal bus bar piece 214a and the second terminal bus bar piece 214b are not welded together, but instead the first terminal bus bar piece 214a and the second terminal bus bar piece 214b are physically separated and are only electrically connected through the first circuit board 194. The second terminal bus bar piece 214c may be electrically connected to a connection pad 214c. The second terminal bus bar piece 214c may be welded to the connection pad 214c with a weld 266.

The first circuit board 194 includes DFETs (discharge field-effect transistors) 218. The DFETs 218 are electrically connected to the power routing elements such that they can control the power routing. For example, the DFETs 218 may break the power routing circuit to prevent over current. In the illustrated embodiment, the first circuit board 194 includes four DFETs 218, however other embodiments may use fewer or more DFETs 218. The DFETs 218 are used to protect the battery pack 10 from over current and overheating. The DFETs 218 are directly mounted onto the first circuit board 194 such that the DFETs help with heatsinking.

The first circuit board 194 is electrically connected to the second circuit board 198. A plurality of aluminum standoffs 202 couple the first circuit board 194 to the second circuit board 198. Each of the standoffs in the plurality of aluminum standoffs has a break torque of 1.1 Nm, a pull strength of 330 N, and shears at 154N at a distance of 6 mm.

The second circuit board 198 is situated above the first circuit board 194. The second circuit board 198 may control the information and discharge current of the battery pack 10.

The second circuit board 198 includes a terminal housing 222 that supports the battery pack terminals 192. The terminal housing 222 includes separators 224 that separate the battery pack terminals 192 and prevent the battery pack terminals 192 from touching. The terminal housing 222 may be formed from an insulating material or a plastic. The terminal housing 222 may have a section that extends downward toward the first circuit board 194 and touch the first circuit board 194.

The second circuit board 198 may further include a secondary terminal support 236. The secondary terminal support 236 may be formed from metal and may be positioned around the terminal housing 222. The secondary terminal support 236 further supports the battery pack terminals 192 if the battery pack 10 is dropped. The secondary terminal support 236 may have a thickness of d6. The thickness d6 may be between 1 mm and 3 mm. The thickness d6 may be between 1.5 mm and 2.5 mm. The thickness d6 may be 2.25 mm.

There is an air gap between the secondary terminal support 236 and the first circuit board 194. The air gap may have a thickness of d7. The thickness d7 may be between 1 mm and 2 mm. The thickness d7 may be between 1 mm and 1.5 mm. The thickness d7 may be 1.35 mm.

The circuit module 22 further includes at least one thermistor 250 and a voltage tap 258. The thermistor 250 monitors the temperature of the pouch cells 114a-114e in the stack of pouch cells 114. The thermistor 250 may be a flex circuit. In the illustrated embodiment, the battery pack includes a first thermistor 250a adjacent the first side 13 and a second thermistor 250b on adjacent the second side 15. The thermistors 250a, 250b have a first end 251 that connects to the first circuit board 194 and a second end 252 that extends between the pouch cells 114-114e in the stack of pouch cells 114. The first end 251 of the thermistors 250a, 250b extends partially between the first side 13 and the second side 15 along the first circuit board 194. More specifically, the first end 251a of the first thermistor 250a extends from the second side 15 toward the first side 13 along the first circuit board, and the first end 251b of the second thermistor 250b extends from the first side 13 toward the second side 15 along the first circuit board 194.

The second end 252 of the thermistors 250a, 250b extend down the outside of the core box 112. The second end 252 of the thermistors 250a, 250b access the stack of pouch cells 114 by entering the recess 128 of the core box 112 by extending through the openings 132 disposed on the side walls 122, 123 of the core box 112. The second end 252 includes branches 253 that extend between the pouch cells 114a-114e. More specifically, the first thermistor 250a includes a first branch 253a that partially extends between the first pouch cell 114a and the third pouch cell 114c, while the second thermistor 250b includes a first branch 253b that partially extends between the third pouch cell 114c and the fourth pouch cell 114d. The first thermistor 250a may further include a second branch 253c that partially extends between the fourth pouch cell 114d and the fifth pouch cell 114e, and the second thermistor may further include a second branch 253d that partially extends between the second pouch cell 114b and the fifth pouch cell 114e. The second end 252 may contact the pouch cells 114a-114e placed at the warmest part of the pouch cells 114a-114e. Like the first end 251, the second end 252 of the thermistors 250a, 250b also extend between the second side 15 and the first side 13.

The voltage tap 258 monitors the discharge voltage of the stack of pouch cells 114. The voltage tap 258 includes a flex circuit 256 and voltage sensors 254. The flex circuit 256 is electrically connected to the first circuit board 194 and the end plate 116. The flex circuit 256 partially extends from the second end 16 to the first end 12 along the first circuit board 194. The flex circuit 256 also extends along the end plate 116.

The voltage sensors 254 are disposed in the recesses 174 of the end plate 116 such that the voltage sensors 254 are located between the cell tabs 142, 146 and the end plate 116. More specifically, there is a first voltage sensor 254a connected to the first cell tab 142b of the second pouch cell 114b and the second cell tab 146e of the fifth pouch cell 114e; a second voltage sensor 254b connected to the first cell tab 142d of the fourth pouch cell 114d and the second cell tab 146c of the third pouch cell 114c; a third voltage sensor 254c connected to the first cell tab 142e of the fifth pouch cell 114e and the second cell tab 146d of the fourth pouch cell 114d; and a fourth voltage sensor 254d connected to the first cell tab 142c of the third pouch cell 114c and the second cell tab 146a of the first pouch cell 114a. The voltage sensors 254a-254d are welded to cell tabs 142, 146 with the welds 262 such that the voltage sensors 254a-254d measure the voltage at each weld 262. The voltage sensors 254a-254d are coupled to the flex circuit 256. The voltage sensors 254a-25d may snap onto the flex circuit 256.

With reference to FIG. 33, the weld 262 has an oscillating pattern. The weld 262 includes a first peak 263 (e.g., a positive peak or a top peak) and a second peak 264 (e.g., a negative peak or a bottom peak). The peaks 263, 264 of the weld 262 are rounded. In the illustrated embodiment, the peaks 263, 264 have different widths. More specifically, the first peak 263 is wider than the second peak 264. In other embodiments, the second peak 264 may be wider than the first peak 263 or the peaks 263, 264 may have the same width. The weld 262 has a flat shape such that a portion of the weld amplitude has a straight line or a flat line. In some embodiments, the straight portion of the weld is a fifth of the amplitude. In some embodiments, the straight portion of the weld is a fourth of the amplitude. In some embodiments, the straight portion of the weld is a third of the amplitude.

Another weld 262' is shown in FIG. 34. The weld 262' also has an oscillating pattern and includes a first peak 263' and a second peak 264'. The peaks 263', 264' have a pointed shape. The first peak 264' may have a width that is similar to the thickness of the first peak 263 or second peak 264 of the weld 262. The second peak 264' is narrower than the first peak 263' and narrower than the second peak 264 of the weld 262. The second peak 264' is so narrow that sections near the second peak 264' parts of the weld 262' are double welded. During welding, the weld pattern of the weld 262' requires the laser to start and stop at the peaks 263', 264' of the weld 262' and causes the laser to double-back on itself when welding the peaks 263', 264'.

The circuit module 22 may include a controller (not shown) that controls the operation of the battery pack 10 based on information from the thermistor 250 and the voltage tap 258. For example, the controller may stop the battery pack 10 from discharging if the measured temperature is above a certain temperature threshold. The controller may also stop the battery pack 10 from discharging if the measured voltage is below a certain voltage threshold.

In the illustrated embodiment, the battery pack 10 is an 18 Volt-battery pack. In the illustrated embodiment, the voltage at the first voltage sensor 254a is 3.6 Volts, the voltage at the third voltage sensor 254c is 7.2 Volts, the voltage at the second voltage sensor 254b is 10.8 Volts, and the voltage at the fourth sensor 254d is 14.4 Volts. The voltage at the first leading cell tab 182 is 18 Volts. The voltage at the second leading cell tab 186 is 0 Volts. The voltage values may be different depending on the cells used in the battery pack 10 and the number of cells used in the battery pack 10.

FIG. 35 illustrates another embodiment of a battery pack 1010. The battery pack 1010 is similar to the battery pack 10 and only the difference will be discussed in detail. The battery pack 1010 includes a core box 1112 containing a stack of pouch cells, a first circuit board 1194, a second circuit board 1198 disposed on top of the first circuit board 1194, a thermistor 1250, and a voltage tap 1258. The core box 1112 includes only one opening 1132 on one of the sidewalls and adjacent the thermistor 1250. Unlike the battery pack 10, the battery pack 1010 only includes one thermistor 1250, and the thermistor 1250 is situated between the stack of cells and the core box 1112. Additionally, the voltage tap 1258 of the battery pack 1010 is electrically coupled to the second circuit board 1198, and not the first circuit board 1194.

FIGS. 36A-36L illustrate a method of assembling the battery pack 10. The stack of pouch cells 114 are stacked outside of the core box 112. The stack of pouch cells 114 may include a resilient layer 150 between some or all of the pouch cells 114a-114e. The pouch cells 114a-114e are stacked in an alternating pattern. The thermistor 250 is placed between the cells in the stack of the pouch cells 114, and the stack of pouch cells 114 with the thermistor 250 is placed on the support surface 125 of the core box 112 (FIG. 32B). Next, the end plate 116 is secured to the core box 112 (FIG. 36C). The end plate 116 may be snap fitted to the core box 112. The voltage sensors 254 are secured to the end plate 116 and the cell tabs 142, 146 are folded on the outside of the end plate 116. In some embodiments, the stack of pouch cells 114 are stacked inside the core box 112. In some embodiments, the cell tabs 142, 146 are folded after the first circuit board 194 is coupled to the core box 112.

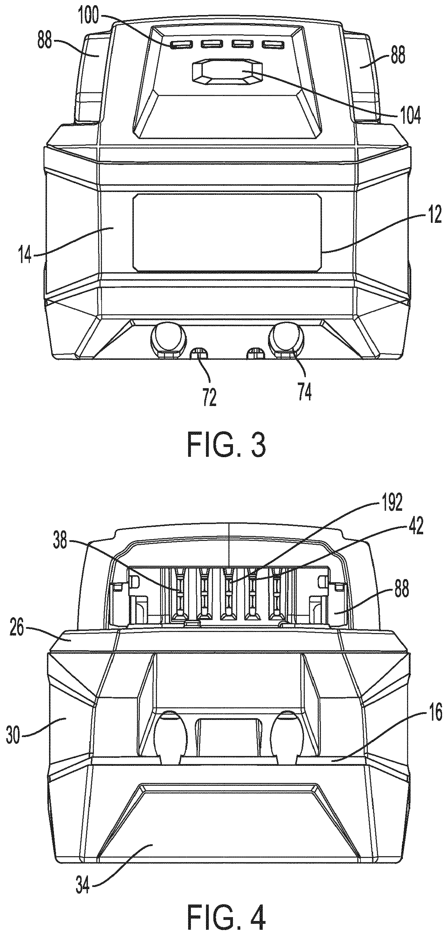

Then, the first circuit board 194 is coupled to the core box 112 and the end plate 116 (FIG. 36D), such that the first circuit board 194, the core box 112 and the end plate 116 enclose the stack of pouch cells 114. The first circuit board 194 is be coupled to the core box 112 and the end plate 116 using the fasteners 140 and the snaps 286. The cell tabs 142, 146 are then welded (FIG. 36E), such that there are welds 262 where the adjacent cell tabs 142, 146 connect. Next, the terminal bus bar 210 is connected to the first leading cell tab 182 and the terminal bus bar 214 and separator 246 are connected to the second leading cell tab 186 (FIG. 3 6F).

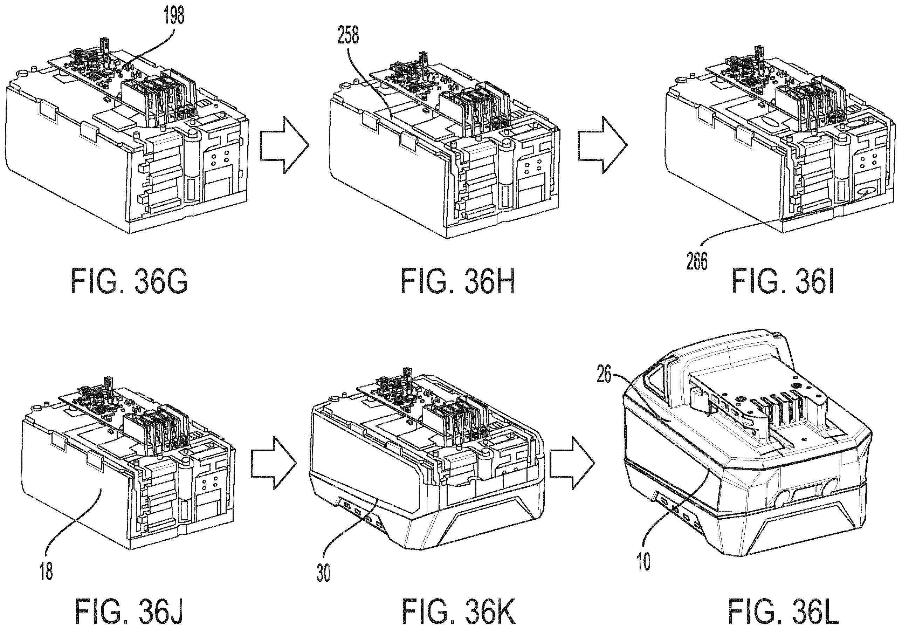

The next step is securing the second circuit board 198 to the first circuit board 194 (FIG. 36G). Then, the voltage tap 258 and the thermistor 250 are installed (FIG. 36H) such that they are connected to stack of pouch cells 114 and the first circuit board 194. Next, the electrical elements are welded together using welds 266 (FIG. 36I). The welds 266 ensure that the stack of pouch cells 114 are electrically coupled to the first and second battery pack terminals 226, 230. In some embodiments, the second circuit board 198 is preassembled with the first circuit board 194, such that the second circuit board 198 is installed with the first circuit board 194. In some embodiments, the electrical elements are welded together using welds 266 before the voltage tap 258 and the thermistor 250 are installed or connected to the first circuit board 194.

The battery module 18 and the circuit module 22 are then sprayed or coated with a thin film to protect the elements from ingress (FIG. 36J). The thin film may be a polymer such as perylene. The battery module 18 and circuit module 22 may be inserted into the second housing piece 30 (FIG. 36K). The first housing piece 26 may be coupled to the second housing piece 30 using the fasteners 60 (FIG. 36L). The fasteners 60 may be inserted from the second housing piece 30 such that the fasteners extend from the second housing piece 30 to the first housing piece 26.

Turning to FIGS. 37 and 38, the temperature of one of the pouch cells 114a-114e during discharge is shown. The temperature of the pouch cell was taken at a first location 270, a second location 274, and a third location 278. The first location is on the side of the second cell tab 146, the second location 274 is on the side of the first cell tab 142, and the third location 278 is opposite the cell tabs 142, 146 and between the first and second location 270, 274.

With reference to FIG. 38, when the cell is discharged at 50 amps, the cell reaches a maximum temperature of 49 degrees Celsius. The cell does not reach a temperature higher than 50 degrees Celsius when it is being discharged at 50 amps. The maximum temperature occurs at the third location 278. When the cell is placed in the battery pack 10, the thermistor 250 is placed on the cell at the third location 278, such that the thermistor 250 measures the maximum temperature of the cell. The cell reaches the maximum temperature after 300 seconds of discharge.

FIGS. 39 and 40 illustrate a cooling airflow path 282 of the battery pack 10. The cooling airflow path extends between the first and second set of air inlets 46, 50 disposed on the first housing piece 26 and the set of air outlets 70 disposed on the second housing piece 30. The cooling airflow path 282 runs between the housing 14 and the core box 112. Air (e.g., air from a charger) flows along the cooling airflow path 282 to cool the battery pack 10 to prevent the battery pack 10 from overheating.

FIG. 41 shows a traditional cooling airflow path 282" of a traditional battery pack 10". Unlike the cooling airflow path 282 that runs between the housing 14 and the core box 112, the cooling airflow path 282" extends into the core box of the battery pack 10" from the first housing piece 26" to the second housing piece 30". As shown in FIG. 37, the traditional battery pack 10" has high temperatures at the sides (e.g., between the housing and the core box) of the battery pack 10".

FIGS. 42-46 compare four different battery packs during charging. The first battery pack may include battery pack vents (e.g., air inlets and air outlets) but not airflow. The second battery pack may include an airflow but not any pack vents. The third battery pack is battery pack 10 that includes pouch cells, a cooling airflow path 282, and pack vents (e.g., air inlets 46, 50 and air outlets 70). The fourth battery pack includes cylindrical cells, an airflow path, and pack vents.

With reference to FIG. 38, the first battery pack begins charging at a time of t1, takes a time of t2 to be fully charged, and takes a time of t3 to be fully cooled to 30 degrees Celsius. The time t1 it takes the first battery pack to start charging is 12 minutes. The time t2 it takes the first battery pack to fully charge is 35 minutes. The time t3 it takes the first battery pack to fully charge is 97 minutes. The first battery pack has a total charge cycle time (e.g., the sum of t1, t2, and t3) of 145 minutes. The first battery pack receives a charge current of 13.5 Amps and experiences current throttling during the charging cycle.

With reference to FIG. 39, the second battery pack begins charging at a time of t1', takes a time of t2' to be fully charged, and takes a time of t3' to be fully cooled to 30 degrees Celsius. The time t1' it takes the second battery pack to start charging is 6 minutes. The time t2' it takes the second battery pack to fully charge is 28 minutes. The time t3' it takes it takes the second battery pack to fully charge is 80 minutes. The second battery pack has a total charge cycle time (e.g., the sum of t1', t2', and t3') of 114 minutes. The second battery pack receives a charge current of 18 Amps and experiences current throttling during the charging cycle.

With reference to FIG. 40, the battery pack 10 (i.e., the third battery pack) begins charging at a time of t1", takes a time of t2" to be fully charged, and takes a time of t3" to be fully cooled to 30 degrees Celsius. The time t1" it takes the battery pack 10 to start charging is 2 minutes. The time t2" it takes the battery pack 10 to fully charge is 23 minutes. The time t3" it takes it takes the battery pack 10 to fully charge is 53 minutes. The battery pack 10 has a total charge cycle time (e.g., the sum of t1", t2", and t3") of less than 80 minutes. More specifically, the battery pack 10 has a total charge cycle time of 78 minutes. The battery pack 10 has a quicker charge cycle than the charge cycles of the first and second battery pack. The battery pack 10 receives a charge current of 18 Amps and, unlike the first and second battery packs, does not experience current throttling during the charging cycle.

With reference to FIG. 41, the fourth battery pack takes 1 minute to start charging and takes 44 minutes to fully charge. After charging, the battery pack takes 41 minutes to cool to 37 degrees Celsius. The total charge cycle for the fourth battery pack is completed in 86 minutes. The fourth battery pack is charged at a current of 12 Amps and does not experience current throttling during the charge cycle. The fourth battery pack begins charging before battery pack 10, however the battery pack has a slower charge time such that the overall charge cycle time is higher in the fourth battery pack compared to the battery pack 10.

FIGS. 47 and 48 compare four different battery cells during discharge. The first battery cell is a 6.0Ah MP battery cell. The second battery cell is a 12.0Ah MP battery cell. The third battery cell is a vented 8Ah battery cell. The fourth battery cell is a 6Ah pouch cell. The stack of pouch cells 114 may be comprised of battery cells of the fourth type of battery cells.

The first battery cell can have a discharge current between 20 amps and 60 amps. The first battery cell can fully discharge, without overheating, when it discharges at any current between 20 amps and 60amps, however at 60 amps the first battery cell undervolts. When the first battery cell is discharged at 20 Amps, the first battery cell has a run time of 17.7 minutes. When the first battery cell is discharged at 60 Amps, the first battery cell has a run time of 5.8 minutes.

The second battery cell can have a discharge current between 20 amps and 100 amps. The second battery cell can fully discharge, without overheating, when it discharges at any current between 20 amps and 50 amps, however at currents above 50 Amps, the second battery cell overheats. When the second battery cell is discharged at 20 Amps, the second battery cell has a run time of 23.4 minutes. When the second battery cell is discharged at 50 Amps, the second battery cell has a run time of 9.6 minutes. When the second battery cell is discharged at 100 amps, it has a run time of 2.7 minutes before it overheats.

The third battery cell can have a discharge current between 20 amps and 100 amps. The third battery cell can fully discharge, without overheating, when it discharges at any current between 20 amps and 60amps, however at currents above 60 Amps, the third battery cell overheats. When the third battery cell is discharged at 20 Amps, the fourth battery cell has a run time of 35.8 minutes. When the third battery cell is discharged at 60 Amps, the third battery cell has a run time of 9.2 minutes. When the third battery cell is discharged at 100 amps, it has a run time of 3.6 minutes before it overheats.

The fourth battery cell can have a discharge current between 20 amps and 100 amps. The fourth battery cell can fully discharge, without overheating, when it discharges at any current between 20 amps and 60amps, however at currents above 60 Amps, the fourth battery cell overheats. When the fourth battery cell is discharged at 20 Amps, the fourth battery cell has a run time of 16.7 minutes. When the fourth battery cell is discharged at 60 Amps, the fourth battery cell has a run time of 5.8 minutes. When the fourth battery cell is discharged at 100 amps, it has a run time of 2.7 minutes before it overheats.

Various features of the disclosure are set forth in the following claims. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A battery pack comprising:
   a housing;
   a core box disposed in the housing, the core box including a support surface;
   a stack of pouch cells supported by the support surface, each pouch cell having cell tabs extending from a common side of the pouch cell;
   an end plate coupled to the core box, the end plate having slots defined therein, the cell tabs extending through the slots;
   battery pack terminals electrically connected to the stack of pouch cells, the battery pack terminals configured to electrically connect to an electrical device; and
   a circuit board coupled to the core box opposite the support surface, the circuit board electrically connected to the stack of pouch cells and the battery pack terminals,
   wherein the core box, the end plate, and the circuit board cooperate to enclose the stack of pouch cells.
2. The battery pack of clause 1, further comprising a resilient layer disposed between adjacent pouch cells of the stack of pouch cells.
3. The battery pack of clause 1, further including a resilient layer disposed between the circuit board and the stack of pouch cells.
4. The battery pack of clause 1, wherein the stack of pouch cells has a height that is greater than 60% of a height of the core box.
5. The battery pack of clause 4, wherein the stack of pouch cells has a height that is greater than 70% of the height of the core box.
6. The battery pack of clause 1, wherein the battery pack has a height between 85mm and 75mm.
7. The battery pack of clause 1, wherein the core box has a height that is greater than 50% of a total height of the battery pack.
8. The battery pack of clause 7, wherein the core box has a height that is greater than 55% of the total height of the battery pack.
9. The battery pack of clause 1, wherein the stack of pouch cells has a height that greater than is 30% of a total height of the battery pack.
10. The battery pack of clause 9, wherein the stack of pouch cells has a height that is greater than 40% of the total height of the battery pack.
11. The battery pack of clause 1, wherein the battery pack terminals extend in a direction toward a plane that is coplanar with the end plate.
12. The battery pack of clause 1, wherein the cell tabs are folded against the end plate.
13. The battery pack of clause 1, wherein
   the housing includes an air inlet and an air outlet,
   a cooling airflow path extends from the air inlet to the air outlet, and
   the cooling airflow path extends between the core box and the housing.
14. The battery pack of clause 1, wherein the core box is snap fitted to the end plate.
15. The battery pack of clause 1, wherein the core box is snap fitted to the circuit board.
16. A battery pack comprising:
   a housing;
   a core box disposed in the housing;
   a stack of pouch cells disposed in the core box, each of the pouch cells including cell tabs coupled to cell tabs of adjacent pouch cells, the pouch cells electrically connected in series such that an electrical pathway through the pouch cells is in a serpentine pattern;
   an end plate coupled to the core box, the end plate having slots defined therein, the cell tabs extending through the slots; and
   a circuit board coupled to the core box, the stack of pouch cells at least partially enclosed by the circuit board and the core box,
   wherein at least a portion of a cell tab is disposed on a side of the circuit board that is opposite that of the core box.
17. The battery pack of clause 16, further comprising a bus bar disposed over a portion of the end plate, the bus bar coupled to a cell tab of a farthest pouch cell from the circuit board of the stack of pouch cells.
18. The battery pack of clause 17, wherein the bus bar extends along the end plate, bends over an edge of the circuit board, and is coupled to the side of the circuit board that is opposite that of the core box.
19. The battery pack of clause 17, further comprising an insulative frame disposed between the bus bar and the end plate.
20. The battery pack of clause 16, further comprising a voltage tap, the voltage tap electrically connected to the circuit board and two coupled cell tabs of adjacent pouch cells.
21. The battery pack of clause 16, further comprising a thermistor electrically connected to the circuit board.
22. The battery pack of clause 16, wherein
   the circuit board includes a first circuit board,
   the battery pack includes a second circuit board disposed on the side of the first circuit board that is opposite that of the core box, and
   the second circuit board is electrically connected to the first circuit board.
23. The battery pack of clause 16, wherein
   the cell tabs of adjacent pouch cells are welded together, and
   the weld has an oscillating shape.
24. A battery pack comprising:
   a housing;
   a core box disposed in the housing;
   a stack of pouch cells disposed in the core box, each of the pouch cells including cell tabs coupled to cell tabs of adjacent pouch cells, the pouch cells electrically connected in series such that an electrical pathway through the pouch cells is in a serpentine pattern;
   an end plate coupled to the core box, the end plate having slots defined therein, the cell tabs extending through the slots;
   a resilient layer disposed between adjacent pouch cells of the stack of pouch cells;
   battery pack terminals electrically connected to the stack of pouch cells, the battery pack terminals configured to electrically connect to an electrical device;
   a first circuit board electrically connected to the stack of pouch cells;
   a second circuit board electrically connected to the battery pack terminals;
   a voltage tap electrically connected to at least one of the first circuit board and the second circuit board and to two coupled cell tabs of adjacent pouch cells; and
   a thermistor electrically connected to one of the first circuit board and the second circuit board,
   wherein the core box, the end plate, and the first circuit board cooperate to enclose the stack of pouch cells.

## Claims

1. A battery pack comprising:
a housing;
a core box disposed in the housing, the core box including a support surface;
a stack of pouch cells supported by the support surface, each pouch cell having cell tabs extending from a common side of the pouch cell;
an end plate coupled to the core box, the end plate having slots defined therein, the cell tabs extending through the slots;
battery pack terminals electrically connected to the stack of pouch cells, the battery pack terminals configured to electrically connect to an electrical device; and
a circuit board coupled to the core box opposite the support surface, the circuit board electrically connected to the stack of pouch cells and the battery pack terminals,
wherein the core box, the end plate, and the circuit board cooperate to enclose the stack of pouch cells.

2. The battery pack of claim 1, further comprising a resilient layer disposed between adjacent pouch cells of the stack of pouch cells.

3. The battery pack of claim 1 or 2, further including a resilient layer disposed between the circuit board and the stack of pouch cells.

4. The battery pack of any preceding claim, wherein the stack of pouch cells has a height that is greater than 60% of a height of the core box, preferably wherein the stack of pouch cells has a height that is greater than 70% of the height of the core box.

5. The battery pack of any preceding claim, wherein the battery pack has a height between 85mm and 75mm.

6. The battery pack of any preceding claim, wherein the core box has a height that is greater than 50% of a total height of the battery pack, preferably wherein the core box has a height that is greater than 55% of the total height of the battery pack.

7. The battery pack of any preceding claim, wherein the stack of pouch cells has a height that greater than is 30% of a total height of the battery pack, preferably wherein the stack of pouch cells has a height that is greater than 40% of the total height of the battery pack.

8. The battery pack of any preceding claim, wherein the battery pack terminals extend in a direction toward a plane that is coplanar with the end plate; and/or wherein the cell tabs are folded against the end plate.

9. The battery pack of any preceding claim, wherein
the housing includes an air inlet and an air outlet,
a cooling airflow path extends from the air inlet to the air outlet, and
the cooling airflow path extends between the core box and the housing.

10. The battery pack of any preceding claim, wherein the core box is snap fitted to the end plate and/or wherein the core box is snap fitted to the circuit board.

11. A battery pack comprising:
a housing;
a core box disposed in the housing;
a stack of pouch cells disposed in the core box, each of the pouch cells including cell tabs coupled to cell tabs of adjacent pouch cells, the pouch cells electrically connected in series such that an electrical pathway through the pouch cells is in a serpentine pattern;
an end plate coupled to the core box, the end plate having slots defined therein, the cell tabs extending through the slots; and
a circuit board coupled to the core box, the stack of pouch cells at least partially enclosed by the circuit board and the core box,
wherein at least a portion of a cell tab is disposed on a side of the circuit board that is opposite that of the core box.

12. The battery pack of claim 11, further comprising a bus bar disposed over a portion of the end plate, the bus bar coupled to a cell tab of a farthest pouch cell from the circuit board of the stack of pouch cells, preferably wherein the bus bar extends along the end plate, bends over an edge of the circuit board, and is coupled to the side of the circuit board that is opposite that of the core box, preferably wherein the battery pack further comprises an insulative frame disposed between the bus bar and the end plate.

13. The battery pack of claim 11 or 12, further comprising a voltage tap, the voltage tap electrically connected to the circuit board and two coupled cell tabs of adjacent pouch cells; and/or further comprising a thermistor electrically connected to the circuit board.

14. The battery pack of claim 11, 12 or 13, wherein
the circuit board includes a first circuit board,
the battery pack includes a second circuit board disposed on the side of the first circuit board that is opposite that of the core box, and
the second circuit board is electrically connected to the first circuit board;
and/or wherein
the cell tabs of adjacent pouch cells are welded together, and
the weld has an oscillating shape.

15. A battery pack comprising:
a housing;
a core box disposed in the housing;
a stack of pouch cells disposed in the core box, each of the pouch cells including cell tabs coupled to cell tabs of adjacent pouch cells, the pouch cells electrically connected in series such that an electrical pathway through the pouch cells is in a serpentine pattern;
an end plate coupled to the core box, the end plate having slots defined therein, the cell tabs extending through the slots;
a resilient layer disposed between adjacent pouch cells of the stack of pouch cells;
battery pack terminals electrically connected to the stack of pouch cells, the battery pack terminals configured to electrically connect to an electrical device;
a first circuit board electrically connected to the stack of pouch cells;
a second circuit board electrically connected to the battery pack terminals;
a voltage tap electrically connected to at least one of the first circuit board and the second circuit board and to two coupled cell tabs of adjacent pouch cells; and
a thermistor electrically connected to one of the first circuit board and the second circuit board,
wherein the core box, the end plate, and the first circuit board cooperate to enclose the stack of pouch cells.
